# EUROPEAN PATENT APPLICATION

(11) **EP 4 507 428 A1**
(43) Date of publication of application: **12.02.2025**
(21) Application number: 23784325.5
(22) Date of filing: 06.04.2023
(51) Int. Cl.: H04W 72/04

(54) **POSITIONING REFERENCE SIGNAL (PRS) TRANSMISSION METHOD AND APPARATUS, AND TERMINAL**

(30) Priority: 06.04.2022 CN 202210360210
(71) Applicant: Vivo Mobile Communication Co., Ltd., Dongguan, Guangdong 523863 (CN)
(72) Inventor: WANG, Yuanyuan, Dongguan, Guangdong 523863 (CN); WU, Huaming, Dongguan, Guangdong 523863 (CN); PENG, Shuyan, Dongguan, Guangdong 523863 (CN); SI, Ye, Dongguan, Guangdong 523863 (CN); LIU, Shixiao, Dongguan, Guangdong 523863 (CN)
(74) Representative: Lavoix
(86) International application number: PCT/CN2023/086588
(87) International publication number: WO 2023/193762

(57) **Abstract**

This application discloses a positioning reference signal PRS transmission method and apparatus, and a terminal, pertaining to the field of communication technologies. The method of embodiments of this application includes: mapping, by a first terminal based on first mapping information, a sidelink SL-PRS to a physical sidelink shared channel PSSCH resource for transmission, where the first mapping information includes at least one of the following: a relationship between an SL-PRS bandwidth and a PSSCH resource bandwidth; occupied symbol information of an SL-PRS in a PSSCH resource; and a time division multiplexing TDM mode for SL-PRS and PSSCH.

## Description

### CROSS-REFERENCE TO RELATED APPLICATIONS

This application claims priority to Chinese Patent Application No. 202210360210.6, filed in China on April 6, 2022, which is incorporated herein by reference in its entirety.

### TECHNICAL FIELD

This application pertains to the field of communications technologies, and specifically, relates to a positioning reference signal PRS transmission method and apparatus, and a terminal.

### BACKGROUND

The long term evolution (Long Term Evolution, LTE) system supports sidelink (sidelink, or be translated as sidelink, side-link, or side link) transmission, that is, data transmission is performed between terminals (User Equipment, UE) directly on a physical layer. LTE sidelink communication is based on broadcast, although supporting basic safety communication in vehicle to everything (vehicle to everything, V2X), not suitable for other more advanced V2X services. A 5G new radio (New Radio, NR) system supports more advanced sidelink transmission designs, such as unicast, multicast or multicast, so as to support more comprehensive service types.

NR V2X defines two resource allocation modes (mode): in mode 1, resources are scheduled by a base station; in mode 2, UE determines itself what resources to be used for transmission. In this case, resource information may be obtained from a broadcast message of the base station or pre-configuration information. If the UE operates within coverage of the base station and has a radio resource control (Radio Resource Control, RRC) connection to the base station, the UE may operate in mode 1 and/or mode 2; if the UE operates within coverage of the base station but has no RRC connection to the base station, the UE can merely operate in mode 2; and if the UE is outside coverage of the base station, the UE can merely operate in mode 2 and performs V2X transmission based on pre-configuration information.

In mode 2, a specific working manner is as follows: (1) After resource selection is triggered, transmit UE first determines a resource selection window, with a lower boundary of the resource selection window being at a time of T1 after triggering of resource selection and an upper boundary for resource selection being a time of T2 after triggering, where T2 is a value selected by the UE from a packet delay budget (packet delay budget, PDB) of its transport block (Transport Block, TB) transmission, and T2 is not earlier than T1. (2) Before resource selection, the UE needs to determine a candidate resource set (candidate resource set) for resource selection by comparing a reference signal received power (Reference Signal Receiving Power, RSRP) measured on resources in a resource selection window with a corresponding RSRP threshold and then adding the resources into the candidate resource set if the RSRP is lower than the RSRP threshold. (3) After the resource set is determined, the UE randomly selects a transmission resource from the candidate resource set. In addition, the UE may reserve a transmission resource for a next transmission during a current transmission.

There are absolute positioning requirements and relative positioning requirements in the current V2X scenarios; however, the current technologies do not provide how to transmit sidelink positioning reference signals in the V2X scenarios.

### SUMMARY

Embodiments of this application provide a positioning reference signal PRS transmission method and apparatus, and a terminal, which can resolve the problem that how to transmit a sidelink positioning reference signal in a V2X scenario is not defined in the related art.

According to a first aspect, a positioning reference signal PRS transmission method is provided, including:
mapping, by a first terminal based on first mapping information, a sidelink SL-PRS to a physical sidelink shared channel PSSCH resource for transmission, where the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

According to a second aspect, a positioning reference signal PRS transmission method is provided, including:
performing, by a second terminal, measurement on a sidelink SL-PRS based on first mapping information; where the first mapping information is used to indicate a mapping rule for mapping an SL-PRS to a PSSCH resource, and the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

According to a third aspect, a positioning reference signal PRS transmission apparatus is provided, including:
a sending module, configured to: based on first mapping information, map a sidelink SL-PRS to a physical sidelink shared channel PSSCH resource for transmission, where the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

According to a fourth aspect, a positioning reference signal PRS transmission apparatus is provided, including:
a measurement module, configured to perform measurement on a sidelink SL-PRS based on first mapping information; where the first mapping information is used to indicate a mapping rule for mapping an SL-PRS to a PSSCH resource, and the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

According to a fifth aspect, a terminal is provided. The terminal includes a processor and a memory, where a program or instructions capable of running on the processor are stored in the memory, and when the program or the instructions are executed by the processor, the steps of the method according to the first aspect are implemented, or the steps of the method according to the second aspect are implemented.

According to a sixth aspect, a terminal is provided, including a processor and a communication interface, where the processor is configured to: based on first mapping information, map a sidelink SL-PRS to a physical sidelink shared channel PSSCH resource for transmission, where the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

According to a seventh aspect, a terminal is provided, including a processor and a communication interface, where the processor is configured to: perform measurement on a sidelink SL-PRS based on first mapping information; where the first mapping information is used to indicate a mapping rule for mapping an SL-PRS to a PSSCH resource, and the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

According to an eighth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or instructions to implement the method according to the first aspect or implement the method according to the second aspect.

According to a tenth aspect, a computer program/program product is provided, where the computer program/program product is stored in a storage medium, and the computer program/program product is executed by at least one processor to implement the steps of the method according to the first aspect or the method according to the second aspect.

In the embodiments of this application, the first terminal maps the SL-PRS to the PSSCH resource based on the determined first mapping information, for transmission; and the corresponding second terminal performs measurement on the SL-PRS based on the first mapping information, which can not only meet the requirements of positioning on resources, but also avoid interference of positioning on data signals.

### BRIEF DESCRIPTION OF DRAWINGS

FIG. 1 is a block diagram of a wireless communication system to which the embodiments of this application can be applied;
FIG. 2 is a first flowchart of steps of a positioning reference signal PRS transmission method according to an embodiment of this application;
FIG. 3 is a first example diagram in which an SL-PRS bandwidth is the same as a PSSCH resource bandwidth in a positioning reference signal PRS transmission method according to an embodiment of this application;
FIG. 4 is a second example diagram in which an SL-PRS bandwidth is the same as a PSSCH resource bandwidth in a positioning reference signal PRS transmission method according to an embodiment of this application;
FIG. 5 is a first example diagram in which an SL-PRS bandwidth is different from a PSSCH resource bandwidth in a positioning reference signal PRS transmission method according to an embodiment of this application;
FIG. 6 is a second example diagram in which an SL-PRS bandwidth is different from a PSSCH resource bandwidth in a positioning reference signal PRS transmission method according to an embodiment of this application;
FIG. 7 is a third example diagram in which an SL-PRS bandwidth is different from a PSSCH resource bandwidth in a positioning reference signal PRS transmission method according to an embodiment of this application;
FIG. 8 is a fourth example diagram in which an SL-PRS bandwidth is different from a PSSCH resource bandwidth in a positioning reference signal PRS transmission method according to an embodiment of this application;
FIG. 9 is an example of mapping between SL-PRSs and PSSCH resources according to an embodiment of this application;
FIG. 10 is an example of mapping between SL-PRSs and PSSCH resources according to an embodiment of this application;
FIG. 11 is an example of mapping between SL-PRSs and PSSCH resources according to an embodiment of this application;
FIG. 12 is an example of mapping between SL-PRSs and PSSCH resources according to an embodiment of this application;
FIG. 13 is an example of mapping between SL-PRSs and PSSCH resources according to an embodiment of this application;
FIG. 14 is an example of mapping between SL-PRSs and PSSCH resources according to an embodiment of this application;
FIG. 15 is an example of mapping between SL-PRSs and PSSCH resources according to an embodiment of this application;
FIG. 16 is an example of mapping between SL-PRSs and PSSCH resources according to an embodiment of this application;
FIG. 17 is an example diagram in a case with a comb value of SL-PRS being equal to 1 according to an embodiment of this application;
FIG. 18 is an example diagram of SL-PRS mapping in a case of a comb value of SL-PRS being equal to 2 according to an embodiment of this application;
FIG. 19 is an example diagram of SL-PRS mapping in a case of a comb value of SL-PRS being equal to 4 according to an embodiment of this application;
FIG. 20 is a second flowchart of steps of a positioning reference signal PRS transmission method according to an embodiment of this application;
FIG. 21 is a first schematic structural diagram of a PRS transmission apparatus according to an embodiment of this application;
FIG. 22 is a second schematic structural diagram of a PRS transmission apparatus according to an embodiment of this application;
FIG. 23 is a first schematic structural diagram of a terminal according to an embodiment of this application; and
FIG. 24 is a second schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

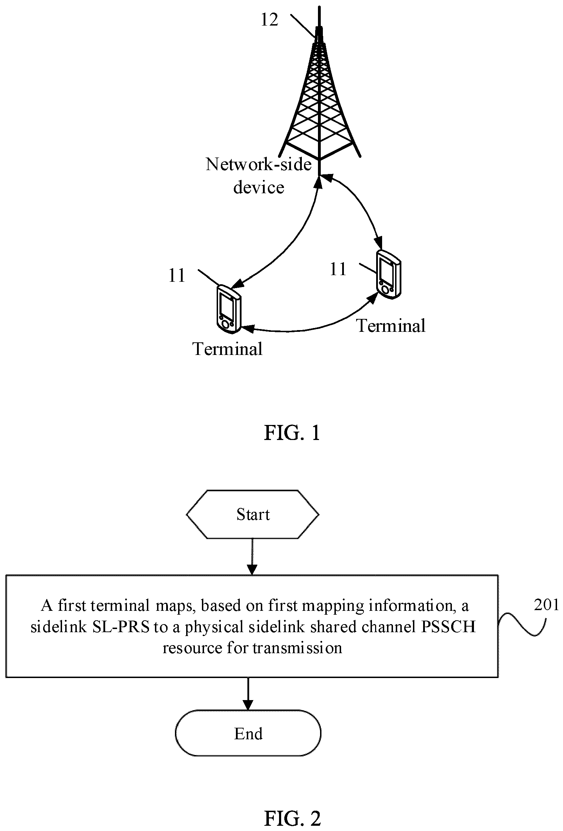

FIG. 1 is a block diagram of a wireless communication system to which the embodiments of this application can be applied. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), location manage function (location manage function, LMF), enhanced serving mobile location centre (Enhanced Serving Mobile Location Centre, E-SMLC), network data analytics function (network data analytics function, NWDAF), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a positioning reference signal (Positioning Reference Signal, PRS) transmission method and apparatus, and a terminal provided in the embodiments of this application by using specific embodiments and application scenarios thereof with reference to the accompanying drawings.

In the embodiments of this application, the positioning signal or SL-PRS may be:
Optionally, the SL-PRS signal may be an SL signal for positioning.

Optionally, the SL-PRS signal may multiplex NR positioning signals, an SL signal or an enhancement in related technologies, such as a CSI reference signal (CSI Reference Signal, CSI-RS), a sidelink synchronization signal block (sidelink Synchronization Signal block, S-SSB), a tracking reference signal (tracking reference signal, TRS), or a demodulation reference signal (Demodulation Reference Signal, DMRS).

Optionally, the SL-PRS signal may be an NR positioning signal specially defined for positioning and extended to the sidelink, and the signal includes but is not limited to a gold code sequence, an M sequence, and a ZC sequence.

Optionally, the SL-PRS signal may be a sidelink positioning signal defined specially for positioning.

As shown in FIG. 2, an embodiment of this application further provides a positioning reference signal PRS transmission method, including:
Step 201: A first terminal maps, based on first mapping information, a sidelink SL-PRS to a physical sidelink shared channel (Physical Sidelink Shared Channel, PSSCH) resource for transmission, where the first mapping information includes at least one of the following:
a relationship between an SL-PRS bandwidth and a PSSCH resource bandwidth;
occupied symbol information of an SL-PRS in a PSSCH resource; and
a time division multiplexing (Time Division Multiplexing, TDM) mode for SL-PRS and PSSCH.

Optionally, the PSSCH resource mentioned in this embodiment of this application is a scheduled PSSCH resource; specifically, the PSSCH resource is scheduled by scheduling indication information for scheduling a PSSCH. For example, the scheduling indication information includes at least one of the following:
a bandwidth of the scheduled PSSCH resource;
a starting frequency domain position of the scheduled PSSCH resource; and
a slot (slot) for scheduling a PSSCH.

In this embodiment of this application, the method for scheduling a PSSCH resource is as follows: scheduling through scheduling indication information; for example, the scheduling indication information is sidelink control information (Sidelink Control Information, SCI), including 1st SCI or 2nd SCI. Optionally, the scheduled PSSCH resource may occupy 6 to 13 symbols (6 to 13 symbols in one SL slot).

In an optional embodiment, the SL-PRS transmission method is specifically an SL-PRS transmission method between the first terminal and the second terminal, that is, the first terminal maps the SL-PRS to the scheduled PSSCH resource and sends it to the second terminal. It should be noted that the first terminal may be a transmit terminal, and the second terminal may be a receive terminal; or, the first terminal may be a scheduling terminal, and the second terminal may be a transmit terminal; or, the first terminal may be a scheduling terminal, and the second terminal may be a receive terminal, which is not enumerated here.

It should be further noted that in this embodiment, the first terminal and the second terminal need to have consistent understanding on a manner of mapping the SL-PRS to the scheduled PSSCH resource, that is, in a case that the first terminal maps the SL-PRS to the scheduled PSSCH resource for transmission based on the first mapping information, the second terminal can also determine a position of the SL-PRS on the scheduled PSSCH resource based on the first mapping information, so as to receive and analyze the PSSCH and the SL-PRS on the PSSCH resource.

In an optional embodiment, the second terminal, as a receive terminal, performs measurement on the SL-PRS according to a first mapping rule.

In an optional embodiment, the second terminal, as a receive terminal, performs measurement on the SL-PRS according to the first mapping rule and SL-PRS pre-configuration information.

In an optional embodiment, the second terminal, as a receive terminal, performs measurement on the SL-PRS according to the first mapping rule and PSSCH scheduling information.

In at least one optional implementation of this application, the method further includes:
determining, by the first terminal based on a first mode, whether to transmit the SL-PRS on the PSSCH resource; where the first mode includes at least one of the following:
an indication of scheduling indication information for scheduling a PSSCH; where for example, an scheduling indication for scheduling the PSSCH is SCI, or a first SCI (1st SCI) or a second SCI (2nd SCI); optionally, the indication may be 1 bit indicating whether a currently scheduled PSSCH resource or a slot carrying SCI transmits the SL-PRS; optionally, in a case that the scheduling indication information for scheduling the PSSCH includes a plurality of PSSCH resources; optionally, the SL-PRS to be transmitted on which PSSCH resource is indicated by 2 bits or 3 bits; and
an indication of resource pool configuration information; where the resource pool configuration information is configured by a network, indicated by the network, configured by a terminal, indicated by the terminal, or indicated by a higher layer; where optionally, the resource pool configuration information may be 1 bit indicating whether a current resource pool is allowed to be multiplexed by the SL-PRS; optionally, the resource pool configuration information includes dedicated resource information, which may be used for SL-PRS multiplexing; optionally, the resource pool configuration information includes SL-PRS priority indication information that may be multiplexed by the SL-PRS; optionally, the resource pool configuration information includes symbol information that may be multiplexed by the SL-PRS, or the maximum resource proportion or the maximum number of symbols.

Optionally, a configuration granularity of the resource pool configuration information includes at least one of the following:
per resource pool (resource pool);
per quality of service (Quality of Service, QoS);
per logical channel (logical channel);
per logical channel group (logical channel group);
per channel busy ratio (Channel Busy Ratio, CBR); and
per channel occupancy ratio (Channel occupancy ratio, CR).

That is, the resource pool configuration information may be a parameter configured per resource pool, or a parameter configured per QoS, or a parameter configured per logical channel group, or a parameter configured per CBR, or a parameter configured per CR.

For example, the resource pool configuration information may include a plurality of SL-PRS priority indication information multiplexed by the SL-PRS, and each SL-PRS priority indication information is relative to different QoS or different logical channels.

In still another optional embodiment of this application, the method further includes:
determining, by the first terminal, the first mapping information according to a first rule and/or first information; where the first information includes at least one of the following:
the number of physical sidelink control channel (Physical Sidelink Control Channel, PSCCH) symbols;
the number of PSSCH symbols;
a starting symbol of the PSSCH;
a demodulation reference signal (Demodulation Reference Signal, DMRS) pattern (pattern);
an SL-PRS pattern (pattern);
a starting symbol of SL-PRS;
a combination pattern of SL-PRS and DMRS;
a physical sidelink feedback channel (Physical Sidelink Feedback Channel, PSFCH) period; and
TDM configuration information for SL-PRS and PSSCH; where for example, the TDM configuration information is used to indicate that the SL-PRS and the PSSCH are for slot-based TDM, or used to indicate that SL-PRS and the PSSCH are for symbol-based TDM.

Optionally, the first information includes the SL-PRS pre-configuration information, including at least one of the following: the number of symbols of the SL-PRS, a comb value, the SL-PRS pattern, and the starting symbol of the SL-PRS.

Optionally, the first information includes the SL-PRS pre-configuration information, including frequency domain information, such as at least one of the following: the SL-PRS bandwidth, and a relationship between the SL-PRS and the PSSCH.

In an optional embodiment, the SL-PRS pattern may include multiple patterns in the pre-configuration information, and a specific pattern adopted for transmitting the SL-PRS may be determined according to the first rule or scheduling information (such as SCI).

The first rule is indicated by the scheduling indication information for scheduling a PSSCH or indicated by the resource pool configuration information, or the first rule is a predefined SL-PRS mapping rule.

Optionally, the first rule includes a relationship between the SL-PRS (pattern, the number of symbols, comb, starting symbol) and the number of symbols of PSCCH, or a relationship between the SL-PRS (pattern, the number of symbols, comb, starting symbol) and the PSSCH position and number of symbols of PSSCH; or a relationship between the SL-PRS (pattern, the number of symbols, comb, starting symbol) and the DMRS.

Optionally, the PSFCH period is indicated by the resource pool configuration information; for example, P={0,1,2,4}slot, and some slots (slot) may not have a PSFCH. When the configuration is 0, it means that there is no PSFCH resource in the resource pool (resource pool).

In at least one embodiment of this application, the first terminal may determine the first mapping information only according to the first rule; or determine the first mapping information based on both the first rule and the first information, which is not specifically limited here.

In an optional embodiment, the relationship between the SL-PRS bandwidth and the PSSCH resource bandwidth includes:
the SL-PRS bandwidth is the same as the PSSCH resource bandwidth;
   or
the SL-PRS bandwidth is different from the PSSCH resource bandwidth.

For example, the resource pool configuration information or scheduling indication signaling indicates that the SL-PRS bandwidth is the same as or different from the PSSCH resource bandwidth. For another example, the protocol predefines or indicates that the SL-PRS bandwidth is the same as or different from the PSSCH resource bandwidth.

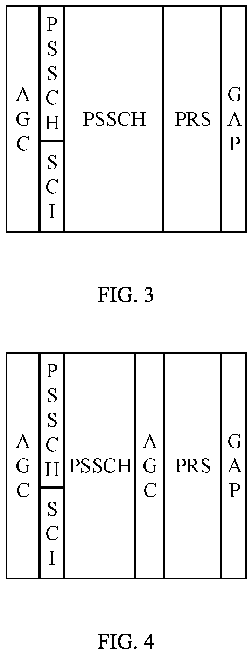

The SL-PRS bandwidth being the same as or different from the PSSCH resource bandwidth can be understood as: the bandwidth is the same in size and location. For example, as shown in FIG. 3 and FIG. 4, the 1st symbol is automatic gain control (Automatic Gain Control, AGC), the last symbol is used for measurement gap (gap), and the SCI is used for scheduling a PSSCH resource. It can also be understood that SL-PRS transmission is within a frequency domain range of the PSSCH resource and shares the same frequency domain bandwidth.

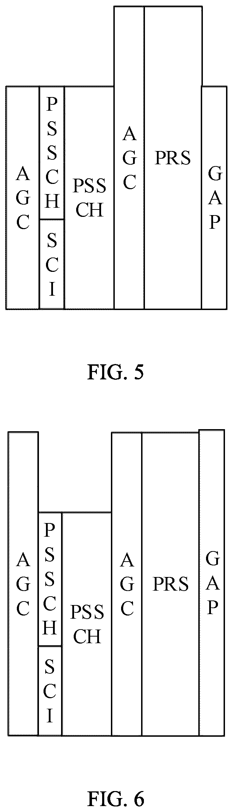

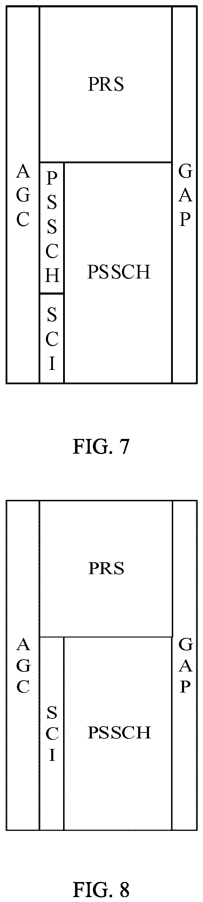

In at least one embodiment of this application, in a case that the SL-PRS bandwidth is different from the PSSCH resource bandwidth, there are two cases as follows:
Case 1: the SL-PRS is time division multiplexed with an actually transmitted PSSCH, as shown in FIGs. 5 and 6.
Case 2: the SL-PRS is frequency division multiplexed with an actually transmitted PSSCH, as shown in FIGs. 7 and 8.

In an optional embodiment, in case 1 where the SL-PRS bandwidth is different from the PSSCH resource bandwidth, and the SL-PRS and the PSSCH are time division multiplexed, the scheduling indication information or the resource pool configuration information is further used to indicate at least one of the following:
the SL-PRS bandwidth; and
a variation bandwidth of the SL-PRS bandwidth relative to the PSSCH resource bandwidth, such as an increased bandwidth of the SL-PRS relative to the PSSCH;
a starting frequency domain position of the SL-PRS; and
offset information of the starting frequency domain position of the SL-PRS relative to a starting frequency domain position of the PSSCH resource.

For example, the SL-PRS bandwidth is indicated by SCI, or the increased bandwidth of the SL-PRS relative to the PSSCH is indicated by SCI.

For another example, the starting frequency domain position of the SL-PRS is indicated by SCI, or the starting frequency domain position of the SL-PRS deviated from the PSSCH is indicated by SCI.

It should be noted that if an optional SL-PRS bandwidth is predefined or pre-specified by the protocol, it is not necessary to indicate the SL-PRS bandwidth during further scheduling; or, if the protocol predefines or pre-specifies a plurality of optional SL-PRS bandwidths (for example, N types), it is necessary to indicate one of the N types to be used for further scheduling.

Optionally, the first rule indicates the N SL-PRS bandwidths.

Optionally, the first rule indicates a relationship between the SL-PRS bandwidth and the PSSCH bandwidth in different cases (such as different PSSCH bandwidths).

Optionally, the first rule indicates how to determine the SL-PRS bandwidth based on the PSSCH bandwidth.

It should be noted that if the protocol predefines or pre-specifies one optional SL-PRS bandwidth, optionally, the scheduling indication information merely needs to indicate the starting frequency domain position or the ending frequency domain position of the SL-PRS.

It should be noted that if the protocol predefines or pre-specifies one optional starting frequency domain position of the SL-PRS or a relationship between the starting frequency domain position of the SL-PRS and the starting frequency domain position of the PSSCH/PSCCH, optionally, the scheduling indication information merely needs to indicate bandwidth-related information of the SL-PRS.

In another optional implementation, in case 2 where the SL-PRS bandwidth is different from the PSSCH resource bandwidth, and the SL-PRS and the PSSCH are frequency division multiplexed, the scheduling indication information or the resource pool configuration information is further used to indicate at least one of the following:
occupied bandwidth allocation information of an SL-PRS in a PSSCH resource;
the SL-PRS bandwidth; and
a variation bandwidth of the SL-PRS bandwidth relative to the PSSCH resource bandwidth.

Similarly, if an optional SL-PRS bandwidth is predefined or pre-specified by the protocol, it is not necessary to indicate the SL-PRS bandwidth during further scheduling; or, if the protocol predefines or pre-specifies a plurality of optional SL-PRS bandwidths (for example, N types), it is necessary to indicate one of the N types to be used for further scheduling.

Optionally, the first rule indicates an FDM mode for the SL-PRS and the PSSCH, optionally, a ratio of the SL-PRS in FDM.

Optionally, the first rule indicates the N SL-PRS bandwidths.

Optionally, in case 2, the first terminal maps the SL-PRS to the PSSCH resource for transmission, including:
performing, by the first terminal, rate matching (rate matching) or puncturing (puncturing) on an SL data channel or SL signal on the PSSCH resource.

Optionally, in case 2, the method further includes:
determining, by the first terminal, a gap (gap) between an SL-PRS and an SL channel according to a predefinition, or a network configuration, or a terminal configuration.

The SL channel includes at least one of SL PSSCH, SL PSFCH, and SL PSCCH. That is, a gap between an SL-PRS and an SL channel is predefined by the protocol, or configured by the network, or configured by the terminal. With the gap, small interference can be ensured during inband (inband) transmission.

It should be noted that the foregoing "relationship between the SL-PRS bandwidth and the PSSCH resource bandwidth" needs to be combined with "occupied symbol information of the SL-PRS in the PSSCH resource " so as to determine time-frequency allocation for the SL-PRS.

In at least one embodiment of this application, the occupied symbol information of the SL-PRS in the PSSCH resource includes at least one of the following:
at least one of an occupied symbol position, the number of occupied symbols, and a starting occupied symbol of an SL-PRS in a PSSCH resource; and
an SL-PRS pattern, where the SL-PRS pattern (pattern) is used to indicate at least two of the number of occupied symbols, an occupied symbol position, and a starting occupied symbol of the SL-PRS in the PSSCH resource, and a comb (comb) value of the SL-PRS.

In an embodiment, the first rule further includes specifying an optional SL-PRS pattern.

In an embodiment, the first rule further includes specifying an optional occupied symbol position of the SL-PRS in the PSSCH resource. Optionally, for one resource pool, one symbol position of a plurality of symbol positions is selected for indication.

In an embodiment, the first rule further includes specifying occupied symbol positions of different SL-PRSs in PSSCH resources . Optionally, the occupied symbol positions of different SL-PRSs in PSSCH resources are indicated by the first scheduling information (one is indicated by the SCI), or the first rule indicates a relationship between the symbol position of the SL-PRS and PSSCH information or the DMRS, and the symbol position of the SL-PRS may be calculated according to the determined PSSCH information or DMRS.

At least one of the occupied symbol position, the number of occupied symbols, and the starting occupied symbol of the SL-PRS in the PSSCH resource, and the comb value of the SL-PRS is related to second information, where the second information includes at least one of the following:
a symbol length of physical sidelink control channel PSCCH, such as {2,3};
a starting symbol of the PSSCH, such as {2,4,5};
a symbol length of the PSSCH, such as {6,7,8,9,10,11,12,13};
a demodulation reference signal DMRS pattern (pattern), such as the number of symbols occupied by the DMRS and a symbol position of the DMRS; and
whether a slot in which the SL-PRS is located includes a physical sidelink feedback channel PSFCH resource.

In an optional embodiment, the SL-PRS pattern may be jointly indicated along with the DMRS pattern.

In another optional implementation, the protocol indicates or pre-specifies a correspondence between the SL-PRS pattern and the DMRS pattern.

The starting symbol of the SL-PRS which is occupied from the scheduled PSSCH resource is any one of the following:
(1) A starting symbol of the PSSCH. For example, the starting symbol of the SL-PRS may be located at the starting symbol of the PSSCH only in a case that the starting symbol of the PSSCH is different from the starting symbol of the PSCCH, that is, the starting symbol of the PSSCH is not equal to 2.
(2) The N1-th symbol after the starting symbol of the PSSCH. In a case that the starting symbol of the SL-PRS which is occupied from scheduled PSSCH resource is the N1-th symbol after the starting symbol of the PSSCH, a value of N1 is related to the following information: whether a starting symbol of the PSCCH is the same as the starting symbol of the PSSCH.

For example, the starting symbol of the PSCCH is the same as the starting symbol of the PSSCH, that is, the starting symbol of the PSSCH is 2, then the starting symbol of the SL-PRS is located at the starting symbol of the PSSCH + N1', which can also be understood that the starting symbol of the SL-PRS is located at the last symbol position of the PSCCH + N1.

For another example, the starting symbol of the PSCCH is different from the starting symbol of the PSSCH, that is, the starting symbol of the PSSCH is 4 or 5, then the starting symbol of the SL-PRS is located at the starting symbol of the PSSCH + N1", which can also be understood that the starting symbol of the SL-PRS is located at the last symbol position of the PSCCH + N1, where a value of N1' is different from a value of N1".

(3) The N2-th symbol of the PSSCH resource. Optionally, a value of N2 may be determined based on the symbol length of the PSSCH. For example, for the symbol length of the PSSCH {6,7,8,9,10,11,12,13}, the value of N2 may be not exactly the same, or completely the same, or completely different.

(4) The N3-th symbol after the last symbol of the PSCCH. Optionally, a specific value of N3 is determined according to whether the last symbol of the PSCCH is symbol 3 or symbol 4, which may be different.

(5) An optional symbol related to the DMRS pattern and the number of symbols occupied by the PSSCH.

(6) The N4-th symbol after a DMRS symbol position. Optionally, N4 is equal to 1. Further optionally, the DMRS symbol position may be the last symbol position or a middle symbol position. For example, in a case of two DMRS symbols, the DMRS symbol position is a corresponding last symbol position. For another example, in a case of more than two DMRS symbols, the DMRS symbol position is a symbol position of the corresponding second DMRS.

(7) The N5-th symbol before a symbol position of the last DMRS, which can also be understood as that the symbol position of the SL-PRS occupies the N5-th symbol before the symbol position of the last DMRS. For example, in a case of more than two DMRS symbols, if transmission of the last DMRS symbol is cancelled, the symbol position of the SL-PRS is {DMRS _{Ending position}-N5 to DMRS _{Ending position}}. For another example, in a case of more than two DMRS symbols, the symbol position of the SL-PRS is {DMRS _{Ending position}-N5 to DMRS _{Ending position}-1} without occupying the last DMRS symbol for transmission.

In at least one optional embodiment of this application, in a case that the symbol position or the starting symbol position of the SL-PRS determined by the first terminal according to any one of the above 1) to 6) overlaps with the symbol position of the DMRS, the SL-PRS is transmitted on the symbol after the DMRS. In one case, the starting symbol of the SL-PRS is transmitted on the 1st symbol after the DMRS.

In at least one embodiment of this application, in a case that the starting symbol of the SL-PRS which is occupied from scheduled PSSCH resource is: 5) an optional symbol related to the DMRS pattern and the number of symbols occupied by the PSSCH:
In an optional embodiment, the symbol position of the SL-PRS related to the DMRS pattern is at least one of the following:

When PSSCH=6 symbols, the selectable symbol position of the SL-PRS is at least one or at least N (N is the symbol length of the SL-PRS) of the following: {4,6,7,8,9}.

When PSSCH=7-8 symbols, the selectable symbol position of the SL-PRS is at least one or at least N (N is the symbol length of the SL-PRS) of the following: {[3],4,6,7,8,9}.

When PSSCH=9-10 symbols, the selectable symbol position of the SL-PRS is at least one or at least N (N is the symbol length of the SL-PRS) of the following:
{4,5,6,7,9,10,11,12}, where a corresponding DMRS has 2 symbols with symbol positions being {3,8}; or
{5,6,8,9,10,11,12}, where a corresponding DMRS has 2 symbols with symbol positions being {4,8}; or
{5,6,7,9,10,11,12}, where a corresponding DMRS has 2 symbols with symbol positions being {1,4,7}.

When PSSCH=11-12 symbols, the selectable symbol position of the SL-PRS is at least one or at least N (N is the symbol length of the SL-PRS) of the following:
{4,5,6,7,8,9,11,12}, where a corresponding DMRS has 2 symbols with symbol positions being {3,10}; or
{5,6,7,8,9, 11,12}, where a corresponding DMRS has 2 symbols with symbol positions being {4,10}; or
{[3],4,6,7,8,10,11,12}, where a corresponding DMRS has 3 symbols with symbol positions being {1,5,9}; or
{5,6,8,9,11,12}, where a corresponding DMRS has 4 symbols with symbol positions being {1,4,7,10}.

When PSSCH=13 symbols, the selectable symbol position of the SL-PRS is at least one or at least N (N is the symbol length of the SL-PRS) of the following:
{4,5,6,7,8,9,11,12}, where a corresponding DMRS has 2 symbols with symbol positions being {3,10}; or
{4,5,7,8,9,10,12}, where a corresponding DMRS has 3 symbols with symbol positions being {1,6,11}; or
{3,5,6,8,9,11,12}, where a corresponding DMRS has 4 symbols with symbol positions being {1,4,7,10}; or
{5,6,8,9,11,12}, where a corresponding DMRS has 2 symbols with symbol positions being {4,10}.

In another optional embodiment, the starting symbol position of the SL-PRS related to the DMRS pattern is at least one of the following: {4,5,6,7,8,9,10,11}. Further, the starting symbol position of the SL-PRS is related to the following information:

When PSSCH=6 symbols, the selectable starting symbol position of the SL-PRS is: {6}.

When PSSCH=7-8 symbols, the selectable starting symbol position of the SL-PRS is: {6}.

When PSSCH=9-10 symbols, the selectable starting symbol position of the SL-PRS is:
{4,9}, where a corresponding DMRS has 2 symbols with symbol positions being {3,8}; or
{5,9}, where a corresponding DMRS has 2 symbols with symbol positions being {4,8}; or
{5,9}, where a corresponding DMRS has 2 symbols with symbol positions being {1,4,7}; or

When PSSCH=11-12 symbols, the selectable starting symbol position of the SL-PRS is:
{4,11}, where a corresponding DMRS has 2 symbols with symbol positions being {3,10}; or
{5,11}, where a corresponding DMRS has 2 symbols with symbol positions being {4,10}; or
{6,10}, where a corresponding DMRS has 3 symbols with symbol positions being {1,5,9}; or
{5,11}, where a corresponding DMRS has 4 symbols with symbol positions being {1,4,7,10}.

When PSSCH=13 symbols, the selectable starting symbol position of the SL-PRS is:
{4,11}, where a corresponding DMRS has 2 symbols with symbol positions being {3,10}; or
{4,7}, where a corresponding DMRS has 3 symbols with symbol positions being {1,6,11}; or
{5,8}, where a corresponding DMRS has 4 symbols with symbol positions being {1,4,7,10}; or
{5,8,11}, where a corresponding DMRS has 2 symbols with symbol positions being {4,10}.

In at least one embodiment of this application, the symbol length (for example, the symbol length is 2 or 4) of the SL-PRS which is occupied from the scheduled PSSCH resource is related to third information, and the third information includes at least one of the following:
symbol positions of two adjacent DMRSs; where for example, the symbol length of the SL-PRS=DMRS _{Ending-position} (the last DMRS position)-DMRS _{Ending-1 position} (the second-to-last DMRS position); for another example, the symbol length of the SL-PRS= DMRS _{Ending-position} (the last DMRS position)-DMRS _{Ending-1} position (the second-to-last DMRS position)-1;
whether a slot in which the SL-PRS is located includes a PSFCH resource, where in one case of including a PSFCH resource, the selectable number of symbols of the SL-PRS is L3 (for example, 2); in another case of not including a PSFCH resource, the selectable number of symbols of the SL-PRS may be greater; therefore, this embodiment of this application can define the suitable number of symbols with or without PSFCH separately;
the number of PSSCH symbols;
a DMRS pattern; and
a position of DMRS.

For example, a symbol length associated with the DMRS pattern is at least one of the following:
when PSSCH≤S1 (such as {8,9}) symbols, the selectable number of SL-PRS symbols is {2,4}; and
when PSSCH>S1, the selectable number of SL-PRS symbols is {2,4}.

Assuming S1=2, if the number of DMRS symbols is greater than 2, the number of SL-PRS symbols is 2; If the number of DMRS symbols≤2, the number of SL-PRS symbols is {2,4}.

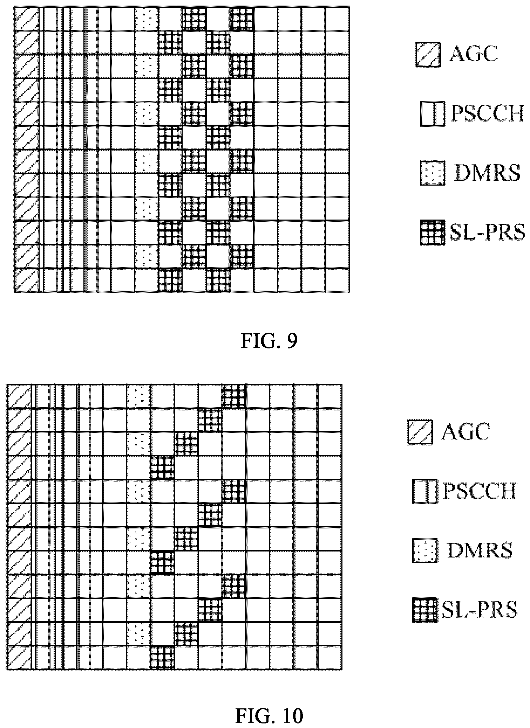

FIG. 9 and FIG. 10 show part of examples for the number of SL-PRS symbols being 4. Optionally, the diagram may be extended in combination with the selectable symbol positions of the SL-PRS in the above embodiment and applied to any symbol position.

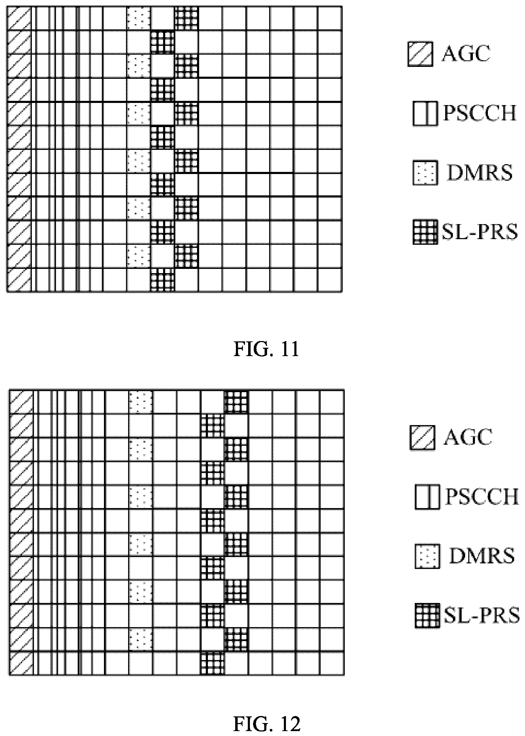

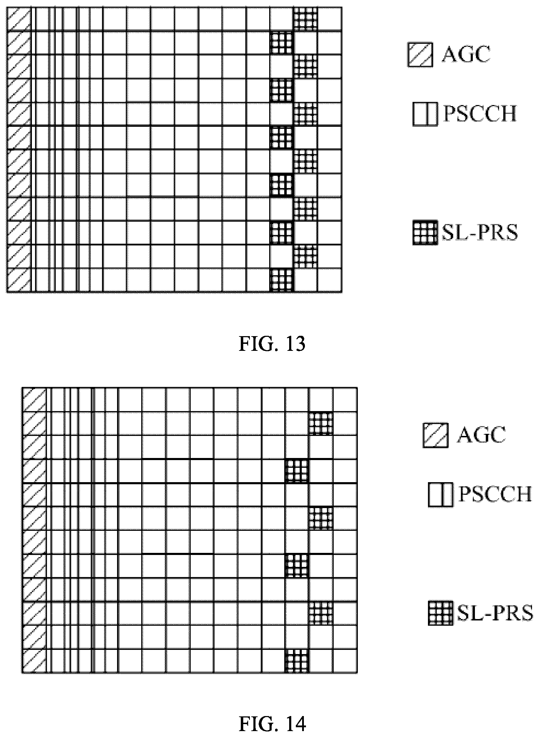

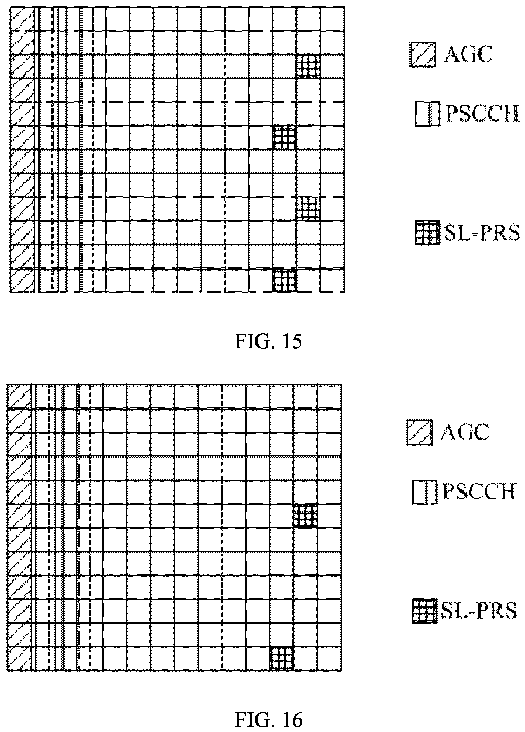

FIG. 11 to FIG. 16 illustrate part of examples for the number of SL-PRS symbols being 2. Optionally, the diagram may be extended in combination with the selectable symbol positions of the SL-PRS in the above embodiment and applied to any symbol position.

In still another optional embodiment of this application, the method further includes:
determining, by the first terminal, an SL-PRS pattern based on a correspondence between DMRS patterns and SL-PRS patterns;
   or
determining, by the first terminal, the SL-PRS pattern based on a DMRS pattern of PSSCH or fourth information;
   or
determining, by the first terminal, the SL-PRS pattern based on the correspondence between DMRS patterns and SL-PRS patterns and the DMRS pattern of PSSCH; where
the correspondence is predefined; and the fourth information includes at least one of the following:
   a symbol length {2,3} of the PSCCH;
   a starting symbol {2,4,5} of the PSSCH;
   a symbol length {6,7,8,9,10,11,12,13} of the PSSCH; and
   whether a slot in which the SL-PRS is located includes a PSFCH resource.

In an embodiment, there are at most M DMRS patterns, where one or more DMRS patterns are associated with SL-PRS, and the SL-PRS is determined based on an indicated DMRS pattern and an SL-PRS associated with the DMRS pattern.

In another embodiment, there are at most M DMRS patterns, where one or more DMRS patterns are associated with SL-PRS, and the scheduling information or resource pool configuration information includes part of SL-PRS information (that is, the fourth information), and the SL-PRS is determined.

Optionally, the SL-PRS information includes at least one of the following: the number of symbols of the SL-PRS, a comb value, an SL-PRS pattern, and a starting symbol of the SL-PRS.

Optionally, the SL-PRS information includes frequency domain information, such as at least one of the following: the SL-PRS bandwidth, and a relationship between the SL-PRS and the PSSCH.

In still another optional embodiment of this application, the method further includes:
determining, by the first terminal, an SL-PRS pattern based on fifth information and whether a slot in which the SL-PRS is located includes a PSFCH resource, where the fifth information includes at least one of the following:
a symbol length {2,3} of the PSCCH;
a starting symbol {2,4,5} of the PSSCH;
a symbol length {6,7,8,9,10,11,12,13} of the PSSCH; and
a DMRS pattern (pattern).

According to the above embodiment, optionally, at least two predefined modes or patterns of the SL-PRS are included, that is, one is SL-PRS with a PSFCH resource and the other is SL-PRS without a PSFCH resource.

In an optional embodiment, a comb value of the SL-PRS is related to sixth information, and the sixth information includes at least one of the following:
a symbol length of the SL-PRS;
a DMRS pattern; and
a symbol length of the PSSCH.

For example, in one case, the comb value is equal to the number of symbols of the SL-PRS; in another case, the comb value is a common divisor of the number of symbols of the SL-PRS.

Optionally, if the comb value is a common divisor of the number of symbols of the SL-PRS, the SL-PRS is partial stagger (partial stagger). Optionally, the UE reports whether the capability supports partial stagger.

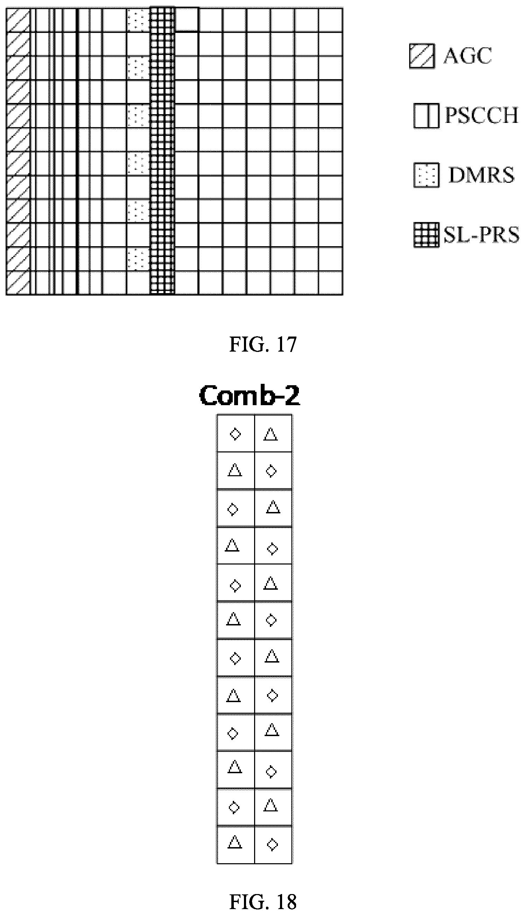

For example, FIG. 17 is an example diagram in a case with a comb value being 1. Optionally, the diagram may be extended in combination with the selectable symbol positions of the SL-PRS in the above embodiment and applied to any symbol position.

For another example, FIG. 18 is an example diagram of SL-PRS mapping in a case with a comb value being equal to 2, and optionally, triangles and diamonds in FIG. 18 respectively represent mapping of different SL-PRSs. It can be understood that one UE has triangular positions for mapping SL-PRSs, and the other UE occupies diamond positions for mapping SL-PRSs. It can also be understood that one UE maps different SL-PRSs to triangle or diamond positions. That is, multiple SL-PRSs are mapped to one symbol, using different resource element (Resource Element, RE) offsets.

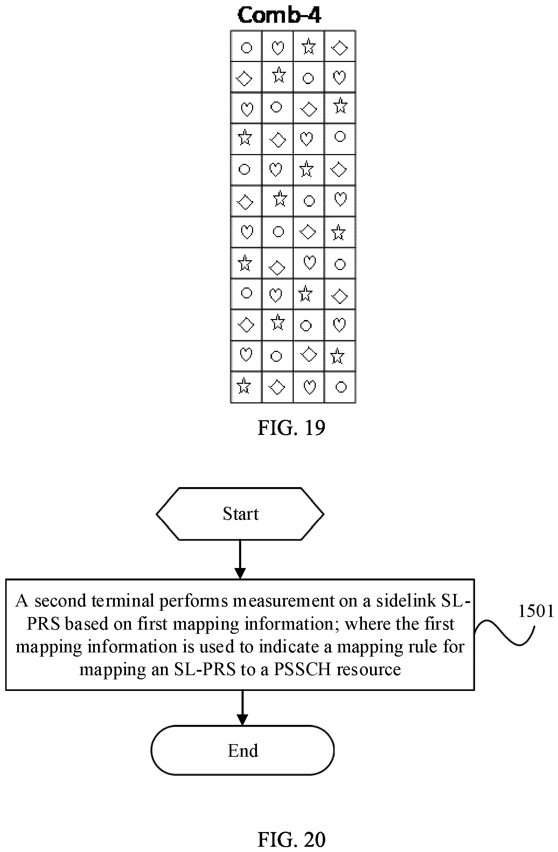

For still another example, FIG. 19 is an example diagram of SL-PRS mapping in a case with a comb value being equal to 4, and optionally, circles, hearts, pentagrams, and diamonds in FIG. 19 respectively represent mapping of different SL-PRSs.

In at least one embodiment of this application, the TDM mode for SL-PRS and PSSCH includes any one of the following:
TDM at a symbol level; and
TDM at a slot level, for example, indicating the TDM mode by a slot of transmitting at least the SL-PRS or a slot of the PSSCH.

Optionally, the first terminal determines to support TDM at a symbol level or TDM at a slot level according to signaling or capability.

In an optional embodiment, a symbol position of an actually transmitted PSSCH is different from a symbol position of the SL-PRS, which can be understood as TDM at the symbol level. In a possible case, the PSSCH is located before a symbol for SL-PRS transmission, that is, an actually transmitted 2nd SCI and/or the PSSCH is located before the SL-PRS transmission.

Optionally, that the first terminal determines the first mapping information based on the first information includes determining the first mapping information based on the scheduling indication information and pre-configured first information. For example, the first terminal determines the bandwidth and slot position of the SL-PRS according to the SCI, and determines the SL-PRS pattern or SL-PRS symbol information according to the pre-configured first information, so as to determine specific mapping from the SL-PRS to the PSSCH.

Optionally, the first terminal determines the first mapping information only according to the scheduling indication information. For example, the first terminal determines the bandwidth, slot position, SL-PRS pattern, or SL-PRS symbol information of SL-PRS according to the SCI, so as to determine specific mapping from the SL-PRS to the PSSCH.

For example, as shown in FIG. 9 to FIG. 16, in the PRS transmission method provided in this embodiment of this application, there are several typical mapping examples for the SL-PRS and the scheduled PSSCH resource.

To sum up, in this embodiment of this application, the first terminal maps the SL-PRS to the scheduled PSSCH resource based on the determined first mapping information, for transmission; and the corresponding second terminal performs measurement on the SL-PRS based on the first mapping information, which can not only meet the requirements of positioning on resources, but also avoid interference of positioning on data signals.

As shown in FIG. 20, an embodiment of this application further provides a positioning reference signal PRS transmission method, including the following step.

Step 1501: A second terminal performs measurement on a sidelink SL-PRS based on first mapping information; where the first mapping information is used to indicate a mapping rule for mapping an SL-PRS to a PSSCH resource, and the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

Optionally, the PSSCH resource mentioned in this embodiment of this application is a scheduled PSSCH resource; specifically, the PSSCH resource is scheduled by scheduling indication information for scheduling a PSSCH. For example, the scheduling indication information includes at least one of the following:
a scheduled PSSCH resource bandwidth;
a starting frequency domain position of the scheduled PSSCH resource; and
a slot (slot) for scheduling a PSSCH.

In this embodiment of this application, the method for scheduling a PSSCH resource is as follows: scheduling through scheduling indication information; for example, the scheduling indication information is sidelink control information (Sidelink Control Information, SCI), including 1st SCI or 2nd SCI. Optionally, the scheduled PSSCH resource may occupy 6 to 13 symbols (6 to 13 symbols in one SL slot).

In an optional embodiment, the step 1501 includes:
performing, by the second terminal, measurement on the SL-PRS based on the first mapping information and scheduling indication information for scheduling a PSSCH;
   or
performing, by the second terminal, measurement on the SL-PRS based on the first mapping information and pre-configured information of the SL-PRS.

In an optional embodiment, the PRS transmission method is specifically a PRS transmission method between the first terminal and the second terminal, that is, the first terminal maps the SL-PRS to the scheduled PSSCH resource and sends it to the second terminal. It should be noted that the first terminal may be a transmit terminal, and the second terminal may be a receive terminal; or the first terminal may be a scheduling terminal, and the second terminal may be a transmit terminal; or the first terminal may be a scheduling terminal, and the second terminal may be a receive terminal, which is not enumerated here.

It should be further noted that in this embodiment, the first terminal and the second terminal need to have consistent understanding on a manner of mapping the SL-PRS to the scheduled PSSCH resource, that is, in a case that the first terminal maps the SL-PRS to the scheduled PSSCH resource for transmission based on the first mapping information, the second terminal can also determine a position of the SL-PRS on the scheduled PSSCH resource based on the first mapping information, so as to receive and analyze the PSSCH and the SL-PRS on the PSSCH resource.

In an optional embodiment, the second terminal, as a receive terminal, performs measurement on the SL-PRS according to a first mapping rule.

In an optional embodiment, the second terminal, as a receive terminal, performs measurement on the SL-PRS according to the first mapping rule and SL-PRS pre-configuration information.

In an optional embodiment, the second terminal, as a receive terminal, performs measurement on the SL-PRS according to the first mapping rule and PSSCH scheduling information.

In at least one optional implementation of this application, the method further includes:
determining, by the second terminal based on a first mode, whether to transmit the SL-PRS on the PSSCH resource; where the first mode includes at least one of the following:
an indication of scheduling indication information for scheduling a PSSCH; for example, an scheduling indication for scheduling the PSSCH is SCI, or 1st SCI or 2nd SCI. Optionally, the indication may be 1 bit indicating whether a currently scheduled PSSCH resource or a slot carrying SCI transmits the SL-PRS. Optionally, in a case that the scheduling indication information for scheduling the PSSCH includes a plurality of PSSCH resources; optionally, the SL-PRS to be transmitted on which PSSCH resource is indicated by 2 bits or 3 bits; and
an indication of resource pool configuration information; where the resource pool configuration information is configured by a network, indicated by the network, configured by a terminal, indicated by the terminal, or indicated by a higher layer; optionally, the resource pool configuration information may be 1 bit indicating whether a current resource pool is allowed to be multiplexed by the SL-PRS; optionally, the resource pool configuration information includes dedicated resource information, which may be used for SL-PRS multiplexing; optionally, the resource pool configuration information includes SL-PRS priority indication information that may be multiplexed by the SL-PRS; optionally, the resource pool configuration information includes symbol information that may be multiplexed by the SL-PRS, or the maximum resource proportion or the maximum number of symbols.

Optionally, a configuration granularity of the resource pool configuration information includes at least one of the following:
per resource pool (resource pool);
per quality of service QoS;
per logical channel (logical channel);
per logical channel group (logical channel group);
per channel busy ratio CBR; and
per channel occupancy ratio CR.

That is, the resource pool configuration information may be a parameter configured per resource pool, or a parameter configured per QoS, or a parameter configured per logical channel group, or a parameter configured per CBR, or a parameter configured per CR.

For example, the resource pool configuration information may include a plurality of SL-PRS priority indication information multiplexed by the SL-PRS, and each SL-PRS priority indication information is relative to different QoS or different logical channels.

In still another optional embodiment of this application, the method further includes:
determining, by the second terminal, the first mapping information according to a first rule and/or first information; where the first information includes at least one of the following:
the number of PSCCH symbols;
the number of PSSCH symbols;
a starting symbol of the PSSCH;
a demodulation reference signal DMRS pattern;
an SL-PRS pattern;
a starting symbol of SL-PRS;
a combination pattern of SL-PRS and DMRS;
a physical sidelink feedback channel PSFCH period; and
TDM configuration information for SL-PRS and PSSCH; where for example, the TDM configuration information is used to indicate that the SL-PRS and the PSSCH are for slot-based TDM, or used to indicate that SL-PRS and the PSSCH are for symbol-based TDM.

The first rule is indicated by the scheduling indication information for scheduling a PSSCH or indicated by the resource pool configuration information, or the first rule is a predefined SL-PRS mapping rule.

Optionally, the first rule includes a relationship of the number of symbols between the SL-PRS (pattern, the number of symbols, comb, starting symbol) and the PSCCH, or a relationship of the number of symbols between the SL-PRS (pattern, the number of symbols, comb, starting symbol) and the PSSCH; or a relationship of the number of symbols between the SL-PRS (pattern, the number of symbols, comb, starting symbol) and the DMRS.

Optionally, the PSFCH period is indicated by the resource pool configuration information; for example, P={0,1,2,4}slot, and some slots (slot) may not have a PSFCH. When the configuration is 0, it means that there is no PSFCH resource in the resource pool (resource pool).

In at least one embodiment of this application, the first terminal may determine the first mapping information only according to the first rule; or determine the first mapping information based on both the first rule and the first information, which is not specifically limited here.

In an optional embodiment, the relationship between the SL-PRS bandwidth and the PSSCH resource bandwidth includes:
the SL-PRS bandwidth is the same as the PSSCH resource bandwidth;
   or
the SL-PRS bandwidth is different from the PSSCH resource bandwidth.

For example, the resource pool configuration information or scheduling indication signaling indicates that the SL-PRS bandwidth is the same as or different from the PSSCH resource bandwidth. For another example, the protocol predefines or indicates that the SL-PRS bandwidth is the same as or different from the PSSCH resource bandwidth.

The SL-PRS bandwidth being the same as or different from the PSSCH resource bandwidth can be understood as: the bandwidth is the same in size and location. For example, as shown in FIG. 3 and FIG. 4, the 1st symbol is automatic gain control AGC, the last symbol is used for GAP, and the SCI is used for scheduling a PSSCH resource. It can also be understood that SL-PRS transmission is within a frequency domain range of the PSSCH resource and shares the same frequency domain bandwidth.

In at least one embodiment of this application, in a case that the SL-PRS bandwidth is different from the PSSCH resource bandwidth, there are two cases as follows:
Case 1: the SL-PRS is time division multiplexed with an actually transmitted PSSCH, as shown in FIGs. 5 and 6.
Case 2: the SL-PRS is frequency division multiplexed with an actually transmitted PSSCH, as shown in FIGs. 7 and 8.

In an optional embodiment, in case 1 where the SL-PRS bandwidth is different from the PSSCH resource bandwidth, and the SL-PRS and the PSSCH are time division multiplexed, the scheduling indication information or the resource pool configuration information is further used to indicate at least one of the following:
the SL-PRS bandwidth; and
a variation bandwidth of the SL-PRS bandwidth relative to the PSSCH resource bandwidth, such as an increased bandwidth of the SL-PRS relative to the PSSCH;
a starting frequency domain position of the SL-PRS; and
offset information of the starting frequency domain position of the SL-PRS relative to a starting frequency domain position of the PSSCH resource.

For example, the SL-PRS bandwidth is indicated by SCI, or the increased bandwidth of the SL-PRS relative to the PSSCH is indicated by SCI.

For another example, the starting frequency domain position of the SL-PRS is indicated by SCI, or the starting frequency domain position of the SL-PRS deviated from the PSSCH is indicated by SCI.

It should be noted that if an optional SL-PRS bandwidth is predefined or pre-specified by the protocol, it is not necessary to indicate the SL-PRS bandwidth during further scheduling; or, if the protocol predefines or pre-specifies a plurality of optional SL-PRS bandwidths (for example, N types), it is necessary to indicate one of the N types to be used for further scheduling.

Optionally, the first rule indicates the N SL-PRS bandwidths.

Optionally, the first rule indicates a relationship between the SL-PRS bandwidth and the PSSCH bandwidth in different cases (such as different PSSCH bandwidths).

Optionally, the first rule indicates how to determine the SL-PRS bandwidth based on the PSSCH bandwidth.

In another optional implementation, in case 2 where the SL-PRS bandwidth is different from the PSSCH resource bandwidth, and the SL-PRS and the PSSCH are frequency division multiplexed, the scheduling indication information or the resource pool configuration information is further used to indicate at least one of the following:
occupied bandwidth allocation information of the SL-PRS in the PSSCH resource;
the SL-PRS bandwidth; and
a variation bandwidth of the SL-PRS bandwidth relative to the PSSCH resource bandwidth.

Similarly, if an optional SL-PRS bandwidth is predefined or pre-specified by the protocol, it is not necessary to indicate the SL-PRS bandwidth during further scheduling; or, if the protocol predefines or pre-specifies a plurality of optional SL-PRS bandwidths (for example, N types), it is necessary to indicate one of the N types to be used for further scheduling.

Optionally, the first rule indicates an FDM mode for the SL-PRS and the PSSCH, optionally, a ratio of the SL-PRS in FDM.

Optionally, the first rule indicates the N SL-PRS bandwidths.

It should be noted that the foregoing "relationship between the SL-PRS bandwidth and the PSSCH resource bandwidth" needs to be combined with "occupied symbol information of the SL-PRS in the PSSCH resource" so as to determine time-frequency allocation for the SL-PRS.

In at least one embodiment of this application, the occupied symbol information of the SL-PRS in the PSSCH resource includes at least one of the following:
at least one of an occupied symbol position, the number of occupied symbols, and a starting occupied symbol of the SL-PRS in PSSCH resource; and
an SL-PRS pattern, where the SL-PRS pattern is used to indicate at least two of the number of occupied symbols, an occupied symbol position, and a starting occupied symbol of the SL-PRS in the PSSCH resource, and a comb (comb) value of the SL-PRS.

In an embodiment, the first rule further includes specifying an optional SL-PRS pattern.

In an embodiment, the first rule further includes specifying an optional occupied symbol position of the SL-PRS in the PSSCH resource. Optionally, for one resource pool, one symbol position of a plurality of symbol positions is selected for indication.

In an embodiment, the first rule further includes specifying occupied symbol positions of a plurality of SL-PRSs in PSSCH resources. Optionally, the occupied symbol positions of the plurality of SL-PRSs in PSSCH resources are indicated by the first scheduling information (one is indicated by the SCI), or the first rule indicates a relationship between the symbol position of the SL-PRS and PSSCH information or the DMRS, and the symbol position of the SL-PRS may be calculated according to the determined PSSCH information or DMRS.

At least one of the occupied symbol position, the number of occupied symbols, and the starting occupied symbol of the SL-PRS in the PSSCH resource, and the comb value of the SL-PRS is related to second information, where the second information includes at least one of the following:
a symbol length of physical sidelink control channel PSCCH, such as {2,3};
a starting symbol of the PSSCH, such as {2,4,5};
a symbol length of the PSSCH, such as {6,7,8,9,10,11,12,13};
a demodulation reference signal DMRS pattern (pattern), such as the number of symbols occupied by the DMRS and a symbol position of the DMRS; and
whether a slot in which the SL-PRS is located includes a physical sidelink feedback channel PSFCH resource.

In an optional embodiment, the SL-PRS pattern may be jointly indicated along with the DMRS pattern.

In another optional implementation, the protocol indicates or pre-specifies a correspondence between the SL-PRS pattern and the DMRS pattern.

The starting symbol of the SL-PRS which is occupied from scheduled PSSCH resource is any one of the following:
(1) a starting symbol of the PSSCH; where for example, the starting symbol of the SL-PRS may be located at the starting symbol of the PSSCH only in a case that the starting symbol of the PSSCH is different from the starting symbol of the PSCCH, that is, the starting symbol of the PSSCH is not equal to 2;
(2) The N1-th symbol after the starting symbol of the PSSCH; where in a case that the starting symbol of the SL-PRS which is occupied from scheduled PSSCH resource is the N1-th symbol after the starting symbol of the PSSCH, a value of N1 is related to the following information: whether a starting symbol of PSCCH is the same as the starting symbol of the PSSCH.

For example, the starting symbol of the PSCCH is the same as the starting symbol of the PSSCH, that is, the starting symbol of the PSSCH is 2, then the starting symbol of the SL-PRS is located at the starting symbol of the PSSCH + N1', which can also be understood that the starting symbol of the SL-PRS is located at the last symbol position of the PSCCH + N1.

For another example, the starting symbol of the PSCCH is different from the starting symbol of the PSSCH, that is, the starting symbol of the PSSCH is 4 or 5, then the starting symbol of the SL-PRS is located at the starting symbol of the PSSCH + N1", which can also be understood that the starting symbol of the SL-PRS is located at the last symbol position of the PSCCH + N1, where a value of N1' is different from a value of N1".

(3) The N2-th symbol of the PSSCH resource. Optionally, a value of N2 may be determined based on the symbol length of the PSSCH. For example, for the symbol length of the PSSCH {6,7,8,9,10,11,12,13}, the value of N2 may be not exactly the same, or completely the same, or completely different.

(4) The N3-th symbol after the last symbol of the PSCCH. Optionally, a specific value of N3 is determined according to whether the last symbol of the PSCCH is symbol 3 or symbol 4, which may be different.

(5) An optional symbol related to the DMRS pattern and the number of symbols occupied by the PSSCH.

(6) The N4-th symbol after a DMRS symbol position. Optionally, N4 is equal to 1. Further optionally, the DMRS symbol position may be the last symbol position or a middle symbol position. For example, in a case of two DMRS symbols, the DMRS symbol position is a corresponding last symbol position. For another example, in a case of more than two DMRS symbols, the DMRS symbol position is a symbol position of the corresponding second DMRS.

(7) The N5-th symbol before a symbol position of the last DMRS, which can also be understood as that the symbol position of the SL-PRS occupies the N5-th symbol before the symbol position of the last DMRS. For example, in a case of more than two DMRS symbols, if transmission of the last DMRS symbol is cancelled, the symbol position of the SL-PRS is {DMRS _{Ending position}-N5 to DMRS _{Ending position}}. For another example, in a case of more than two DMRS symbols, the symbol position of the SL-PRS is {DMRS _{Ending position-}N5 to DMRS _{Ending position-1}} without occupying the last DMRS symbol for transmission.

In at least one optional embodiment of this application, in a case that the symbol position or the starting symbol position of the SL-PRS determined by the first terminal according to any one of the above 1) to 6) overlaps with the symbol position of the DMRS, the SL-PRS is transmitted on the symbol after the DMRS. In one case, the starting symbol of the SL-PRS is transmitted on the 1st symbol after the DMRS.

In at least one embodiment of this application, in a case that the starting symbol of the SL-PRS which is occupied from scheduled PSSCH resource is: 5) an optional symbol related to the DMRS pattern and the number of symbols occupied by the PSSCH:
In an optional embodiment, the symbol position of the SL-PRS related to the DMRS pattern is at least one of the following:
When PSSCH=6 symbols, the selectable symbol position of the SL-PRS is at least one or at least N (N is the symbol length of the SL-PRS) of the following: {4,6,7,8,9}.
When PSSCH=7-8 symbols, the selectable symbol position of the SL-PRS is at least one or at least N (N is the symbol length of the SL-PRS) of the following: {[3],4,6,7,8,9}.
When PSSCH=9-10 symbols, the selectable symbol position of the SL-PRS is at least one or at least N (N is the symbol length of the SL-PRS) of the following:
   {4,5,6,7,9,10,11,12}, where a corresponding DMRS has 2 symbols with symbol positions being {3,8}; or
   {5,6,8,9,10,11,12}, where a corresponding DMRS has 2 symbols with symbol positions being {4,8}; or
   {5,6,7,9,10,11,12}, where a corresponding DMRS has 2 symbols with symbol positions being {1,4,7};
When PSSCH=11-12 symbols, the selectable symbol position of the SL-PRS is at least one or at least N (N is the symbol length of the SL-PRS) of the following:
   {4,5,6,7,8,9,11,12}, where a corresponding DMRS has 2 symbols with symbol positions being {3,10}; or
   {5,6,7,8,9, 11,12}, where a corresponding DMRS has 2 symbols with symbol positions being {4,10}; or
   {[3],4,6,7,8,10,11,12}, where a corresponding DMRS has 3 symbols with symbol positions being {1,5,9}; or
   {5,6,8,9,11,12}, where a corresponding DMRS has 4 symbols with symbol positions being {1,4,7,10};
When PSSCH=13 symbols, the selectable symbol position of the SL-PRS is at least one or at least N (N is the symbol length of the SL-PRS) of the following:
   {4,5,6,7,8,9,11,12}, where a corresponding DMRS has 2 symbols with symbol positions being {3,10}; or
   {4,5,7,8,9,10, 12}, where a corresponding DMRS has 3 symbols with symbol positions being {1,6,11}; or
   {3,5,6,8,9,11,12}, where a corresponding DMRS has 4 symbols with symbol positions being {1,4,7,10}; or
   {5,6,8,9,11,12}, where a corresponding DMRS has 2 symbols with symbol positions being {4,10}.

In another optional embodiment, the starting symbol position of the SL-PRS related to the DMRS pattern is at least one of the following: {4,5,6,7,8,9,10,11}. Further, the starting symbol position of the SL-PRS is related to the following information:
When PSSCH=6 symbols, the selectable starting symbol position of the SL-PRS is: {6}.
When PSSCH=7-8 symbols, the selectable starting symbol position of the SL-PRS is: {6}.
When PSSCH=9-10 symbols, the selectable starting symbol position of the SL-PRS is:
   {4,9}, where a corresponding DMRS has 2 symbols with symbol positions being {3,8}; or
   {5,9}, where a corresponding DMRS has 2 symbols with symbol positions being {4,8}; or
   {5,9}, where a corresponding DMRS has 2 symbols with symbol positions being {1,4,7};
When PSSCH=11-12 symbols, the selectable starting symbol position of the SL-PRS is:
   {4,11}, where a corresponding DMRS has 2 symbols with symbol positions being {3,10}; or
   {511}, where a corresponding DMRS has 2 symbols with symbol positions being {4,10}; or
   {610}, where a corresponding DMRS has 3 symbols with symbol positions being {1,5,9}; or
   {511}, where a corresponding DMRS has 4 symbols with symbol positions being {1,4,7,10};
When PSSCH=13 symbols, the selectable starting symbol position of the SL-PRS is:
   {4,11}, where a corresponding DMRS has 2 symbols with symbol positions being {3,10}; or
   {4,7}, where a corresponding DMRS has 3 symbols with symbol positions being {1,6,11}; or
   {5,8}, where a corresponding DMRS has 4 symbols with symbol positions being {1,4,7,10}; or
   {5,8,11}, where a corresponding DMRS has 2 symbols with symbol positions being {4,10}.

In at least one embodiment of this application, the symbol length (for example, the symbol length is 2 or 4) of the SL-PRS which is occupied from scheduled PSSCH resource is related to third information, and the third information includes at least one of the following:
symbol positions of two adjacent DMRSs; where for example, the symbol length of the SL-PRS=DMRS _{Ending-position} (the last DMRS position)-DMRS _{Ending-1 position} (the second-to-last DMRS position); for another example, the symbol length of the SL-PRS= DMRS Ending-position (the last DMRS position)-DMRS _{Ending-1} position (the second-to-last DMRS position)-1;
whether a slot in which the SL-PRS is located includes a PSFCH resource, where in one case of including a PSFCH resource, the selectable number of symbols of the SL-PRS is L3 (for example, 2); in another case of not including a PSFCH resource, the selectable number of symbols of the SL-PRS may be greater; therefore, this embodiment of this application can define the suitable number of symbols with or without PSFCH separately;
the number of PSSCH symbols;
a DMRS pattern; and
a position of DMRS.

For example, a symbol length associated with the DMRS pattern is at least one of the following:
When PSSCH≤S1 (such as {8,9}) symbols, the selectable number of SL-PRS symbols is {2,4}; and
when PSSCH>S1, the selectable number of SL-PRS symbols is {2,4}.

Assuming S1=2, if the number of DMRS symbols is greater than 2, the number of SL-PRS symbols is 2; If the number of DMRS symbols≤2, the number of SL-PRS symbols is {2,4}.

FIG. 9 and FIG. 10 show part of examples for the number of SL-PRS symbols being 4. Optionally, the diagram may be extended in combination with the selectable symbol positions of the SL-PRS in the above embodiment and applied to any symbol position.

FIG. 11 to FIG. 16 illustrate part of examples for the number of SL-PRS symbols being 2. Optionally, the diagram may be extended in combination with the selectable symbol positions of the SL-PRS in the above embodiment and applied to any symbol position.

In still another optional embodiment of this application, the method further includes:
determining, by the second terminal, an SL-PRS pattern based on a correspondence between DMRS patterns and SL-PRS patterns;
   or
determining, by the second terminal, the SL-PRS pattern based on a DMRS pattern of PSSCH or fourth information;
   or
determining, by the second terminal, the SL-PRS pattern based on the correspondence between DMRS patterns and SL-PRS patterns and the DMRS pattern of PSSCH; where
the correspondence is predefined; and the fourth information includes at least one of the following:
   a symbol length {2,3} of the PSCCH;
   a starting symbol {2,4,5} of the PSSCH;
   a symbol length {6,7,8,9,10,11,12,13} of the PSSCH; and
   whether a slot in which the SL-PRS is located includes a PSFCH resource.

In an embodiment, there are at most M DMRS patterns, where one or more DMRS patterns are associated with SL-PRS, and the SL-PRS is determined based on an indicated DMRS pattern and an SL-PRS associated with the DMRS pattern.

In another embodiment, there are at most M DMRS patterns, where one or more DMRS patterns are associated with SL-PRS, and the scheduling information or resource pool configuration information includes part of SL-PRS information (that is, the fourth information), and the SL-PRS is determined.

Optionally, the SL-PRS information includes at least one of the following: the number of symbols of the SL-PRS, a comb value, an SL-PRS pattern and a starting symbol of the SL-PRS.

Optionally, the SL-PRS information includes frequency domain information, such as at least one of the following: the SL-PRS bandwidth, and a relationship between the SL-PRS and the PSSCH.

In still another optional embodiment of this application, the method further includes:
determining, by the second terminal, an SL-PRS pattern based on fifth information and whether a slot in which the SL-PRS is located includes a PSFCH resource, where the fifth information includes at least one of the following:
a symbol length {2,3} of the PSCCH;
a starting symbol {2,5} of the PSSCH;
a symbol length {6,7,8,9,10,11,12,13} of the PSSCH; and
a DMRS pattern (pattern).

According to the above embodiment, optionally, at least two predefined modes or patterns of the SL-PRS are included, that is, one is the SL-PRS with a PSFCH resource and the other is the SL-PRS without a PSFCH resource.

In an optional embodiment, a comb value of the SL-PRS is related to sixth information, and the sixth information includes at least one of the following:
a symbol length of the SL-PRS;
a DMRS pattern; and
a symbol length of the PSSCH.

For example, in one case, the comb value is equal to the number of symbols of the SL-PRS; in another case, the comb value is a common divisor of the number of symbols of the SL-PRS.

Optionally, if the comb value is a common divisor of the number of symbols of the SL-PRS, the SL-PRS is partial stagger (partial stagger). Optionally, the UE reports whether the capability supports partial stagger.

In at least one embodiment of this application, the TDM mode for SL-PRS and PSSCH includes any one of the following:
TDM at a symbol level; and
TDM at a slot level, for example, indicating the TDM mode by a slot of transmitting at least the SL-PRS or a slot of the PSSCH.

Optionally, the first terminal determines to support TDM at a symbol level or TDM at a slot level according to signaling or capability.

In an optional embodiment, a symbol position of an actually transmitted PSSCH is different from a symbol position of the SL-PRS, which can be understood as TDM at the symbol level. In a possible case, the PSSCH is located before a symbol for SL-PRS transmission, that is, an actually transmitted 2nd SCI and/or the PSSCH is located before the SL-PRS transmission.

Optionally, that the first terminal determines the first mapping information based on the first information includes determining the first mapping information based on the scheduling indication information and pre-configured first information. For example, the first terminal determines the bandwidth and slot position of the SL-PRS according to SCI, and determines the SL-PRS pattern or SL-PRS symbol information according to the pre-configured first information, so as to determine specific mapping from the SL-PRS to the PSSCH.

Optionally, the first terminal determines the first mapping information only according to the scheduling indication information. For example, the first terminal determines the bandwidth, slot position, SL-PRS pattern, or SL-PRS symbol information of SL-PRS according to the SCI, so as to determine specific mapping from the SL-PRS to the PSSCH.

To sum up, in this embodiment of this application, the first terminal maps the SL-PRS to the scheduled PSSCH resource based on the determined first mapping information, for transmission; and the corresponding second terminal performs measurement on the SL-PRS based on the first mapping information, which can not only meet the requirements of positioning on resources, but also avoid interference of positioning on data signals.

In the PRS transmission method provided in the embodiments of this application, the execution subject may be a PRS transmission apparatus. In the embodiments of this application, the PRS transmission method being performed by the PRS transmission apparatus is used as an example to describe the PRS transmission apparatus provided in the embodiments of this application.

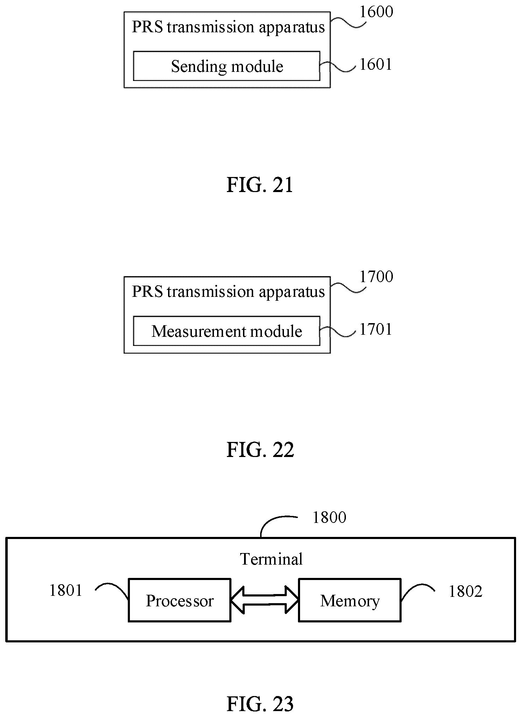

As shown in FIG. 21, an embodiment of this application further provides a positioning reference signal PRS transmission apparatus 1600, including:
a sending module 1601, configured to: based on first mapping information, map a sidelink SL-PRS to a physical sidelink shared channel PSSCH resource for transmission, where the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

In an optional embodiment, the apparatus further includes:
a first determining module, configured to: based on a first mode, determine whether to transmit the SL-PRS on the PSSCH resource; where the first mode includes at least one of the following:
an indication of scheduling indication information for scheduling a PSSCH; and
an indication of resource pool configuration information; where the resource pool configuration information is configured by a network, indicated by the network, configured by a terminal, indicated by the terminal, or indicated by a higher layer.

In an optional embodiment, the apparatus further includes:
a second determining module, configured to: determine the first mapping information according to a first rule and/or first information; where the first information includes at least one of the following:
the number of PSCCH symbols;
the number of PSSCH symbols;
a starting symbol of the PSSCH;
a demodulation reference signal DMRS pattern;
an SL-PRS pattern;
a starting symbol of SL-PRS;
a combination pattern of SL-PRS and DMRS;
a physical sidelink feedback channel PSFCH period; and
TDM configuration information for SL-PRS and PSSCH; where
the first rule is indicated by the scheduling indication information for scheduling a PSSCH or indicated by the resource pool configuration information, or the first rule is a predefined SL-PRS mapping rule.

In an optional embodiment, the relationship between the SL-PRS bandwidth and the PSSCH resource bandwidth scheduled includes:
the SL-PRS bandwidth is the same as the PSSCH resource bandwidth;
   or
the SL-PRS bandwidth is different from the PSSCH resource bandwidth.

In an optional embodiment, in a case that the SL-PRS bandwidth is different from the PSSCH resource bandwidth, and the SL-PRS and the PSSCH are time division multiplexed, the scheduling indication information or the resource pool configuration information is further used to indicate at least one of the following:
the SL-PRS bandwidth;
a variation bandwidth of the SL-PRS bandwidth relative to the PSSCH resource bandwidth;
a starting frequency domain position of the SL-PRS; and
offset information of the starting frequency domain position of the SL-PRS relative to a starting frequency domain position of the PSSCH resource.

In an optional embodiment, in a case that the SL-PRS bandwidth is different from the PSSCH resource bandwidth, and the SL-PRS and the PSSCH are frequency division multiplexed, the scheduling indication information or the resource pool configuration information is further used to indicate at least one of the following:
occupied bandwidth allocation information of the SL-PRS in the PSSCH resource;
the SL-PRS bandwidth; and
a variation bandwidth of the SL-PRS bandwidth relative to the PSSCH resource bandwidth.

In an optional embodiment, the apparatus further includes:
a matching or puncturing module, configured to perform rate matching or puncturing on an SL data channel or SL signal on the PSSCH resource.

In an optional embodiment, the apparatus further includes:
a third determining module, configured to determine a gap (gap) between an SL-PRS and an SL channel according to a predefinition, or a network configuration, or a terminal configuration.

In an optional embodiment, the symbol information of the SL-PRS which is occupied from scheduled PSSCH resource includes at least one of the following:
at least one of a symbol position, the number of symbols, and a starting symbol of the SL-PRS which is occupied from scheduled PSSCH resource; and
an SL-PRS pattern, where the SL-PRS pattern is used to indicate at least two of the number of occupied symbols, an occupied symbol position, and a starting occupied symbol of the SL-PRS in the PSSCH resource, and a comb (comb) value of the SL-PRS.

In an optional embodiment, at least one of the occupied symbol position, the number of occupied symbols, and the starting occupied symbol of the SL-PRS in the PSSCH resource, and the comb value of the SL-PRS is related to second information, where the second information includes at least one of the following:
a symbol length of physical sidelink control channel PSCCH;
a starting symbol of the PSSCH;
a symbol length of the PSSCH;
a demodulation reference signal DMRS pattern; and
whether a slot in which the SL-PRS is located includes a physical sidelink feedback channel PSFCH resource.

In an optional embodiment, the occupied symbol position of the SL-PRS in the PSSCH resource includes at least one of the following:
a starting symbol of the SL-PRS which is occupied from scheduled PSSCH resource; and
a symbol length of the SL-PRS which is occupied from scheduled PSSCH resource.

In an optional embodiment, the starting symbol of the SL-PRS which is occupied from scheduled PSSCH resource includes any one of the following:
a starting symbol of a PSSCH;
the N1-th symbol after the starting symbol of the PSSCH;
the N2-th symbol of the PSSCH resource;
the N3-th symbol after the last symbol of the PSCCH;
an optional symbol related to the DMRS pattern and the number of symbols occupied by the PSSCH;
the N4-th symbol after a DMRS symbol position; and
the N5-th symbol before a symbol position of the last DMRS.

In an optional embodiment, in a case that the starting occupied symbol of the SL-PRS in the PSSCH resource is the N1-th symbol after the starting symbol of the PSSCH, a value of N1 is related to the following information:
whether a starting symbol of the PSCCH is the same as the starting symbol of the PSSCH.

In an optional embodiment, an occupied symbol length of the SL-PRS in the PSSCH resource is related to third information, and the third information includes at least one of the following:
symbol positions of two adjacent DMRSs;
whether a slot in which the SL-PRS is located includes a PSFCH resource;
the number of PSSCH symbols;
a DMRS pattern; and
a position of DMRS.

In an optional embodiment, the apparatus further includes:
a fourth determining module, configured to determine an SL-PRS pattern based on a correspondence between DMRS patterns and SL-PRS patterns; or
determine the SL-PRS pattern based on a DMRS pattern of PSSCH or fourth information; or
determine the SL-PRS pattern based on the correspondence between DMRS patterns and SL-PRS patterns and the DMRS pattern of PSSCH; where
the correspondence is predefined; and the fourth information includes at least one of the following:
   a symbol length of the PSCCH;
   a starting symbol of the PSSCH;
   a symbol length of the PSSCH; and
   whether a slot in which the SL-PRS is located includes a PSFCH resource.

In an optional embodiment, the apparatus further includes:
a fifth determining module, configured to determine an SL-PRS pattern based on fifth information and whether a slot in which the SL-PRS is located includes a PSFCH resource, where the fifth information includes at least one of the following:
a symbol length of the PSCCH;
a starting symbol of the PSSCH;
a symbol length of the PSSCH; and
a DMRS pattern.

In an optional embodiment, a comb value of the SL-PRS is related to sixth information, and the sixth information includes at least one of the following:
a symbol length of the SL-PRS;
a DMRS pattern; and
a symbol length of the PSSCH.

In an optional embodiment, the TDM mode for SL-PRS and PSSCH includes any one of the following:
TDM at a symbol level; and
TDM at a slot level.

In an optional embodiment, a configuration granularity of the resource pool configuration information includes at least one of the following:
per resource pool;
per quality of service QoS;
per logical channel;
per logical channel group;
per channel busy ratio CBR; and
per channel occupancy ratio CR.

In this embodiment of this application, the first terminal maps the SL-PRS to the scheduled PSSCH resource based on the determined first mapping information, for transmission; and the corresponding second terminal performs measurement on the SL-PRS based on the first mapping information, which can not only meet the requirements of positioning on resources, but also avoid interference of positioning on data signals.

It should be noted that the PRS transmission apparatus provided in the embodiments of this application is a transmission apparatus capable of executing the foregoing PRS transmission method, and all embodiments of the foregoing PRS transmission method are applicable to the apparatus, with the same or similar beneficial effects achieved.

As shown in FIG. 22, an embodiment of this application further provides a positioning reference signal PRS transmission apparatus 1700, including:
a measurement module 1701, configured to perform measurement on a sidelink SL-PRS based on first mapping information; where the first mapping information is used to indicate a mapping rule for mapping an SL-PRS to a PSSCH resource, and the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

In an optional embodiment, the measurement module includes:
a first measurement sub-module, configured to perform measurement on the SL-PRS based on the first mapping information and scheduling indication information for scheduling a PSSCH; or
a second measurement sub-module, configured to perform measurement on the SL-PRS based on the first mapping information and pre-configured information of the SL-PRS.

In an optional embodiment, the apparatus further includes:
a tenth determining module, configured to: based on a first mode, determine whether to transmit the SL-PRS on the PSSCH resource; where the first mode includes at least one of the following:
an indication of scheduling indication information for scheduling a PSSCH; and
an indication of resource pool configuration information; where the resource pool configuration information is configured by a network, indicated by the network, configured by a terminal, indicated by the terminal, or indicated by a higher layer.

In an optional embodiment, the apparatus further includes:
an eleventh determining module, configured to: determine the first mapping information according to a first rule and/or first information; where the first information includes at least one of the following:
the number of PSCCH symbols;
the number of PSSCH symbols;
a starting symbol of the PSSCH;
a demodulation reference signal DMRS pattern;
an SL-PRS pattern;
a starting symbol of SL-PRS;
a combination pattern of SL-PRS and DMRS;
a physical sidelink feedback channel PSFCH period; and
TDM configuration information for SL-PRS and PSSCH; where
the first rule is indicated by the scheduling indication information for scheduling a PSSCH or indicated by the resource pool configuration information, or the first rule is a predefined SL-PRS mapping rule.

In an optional embodiment, the relationship between the SL-PRS bandwidth and the PSSCH resource bandwidth includes:
the SL-PRS bandwidth is the same as the PSSCH resource bandwidth;
   or
the SL-PRS bandwidth is different from the PSSCH resource bandwidth.

In an optional embodiment, in a case that the SL-PRS bandwidth is different from the PSSCH resource bandwidth, and the SL-PRS and the PSSCH are time division multiplexed, the scheduling indication information or the resource pool configuration information is further used to indicate at least one of the following:
the SL-PRS bandwidth;
a variation bandwidth of the SL-PRS bandwidth relative to the PSSCH resource bandwidth;
a starting frequency domain position of the SL-PRS; and
offset information of the starting frequency domain position of the SL-PRS relative to a starting frequency domain position of the PSSCH resource.

In an optional embodiment, in a case that the SL-PRS bandwidth is different from the PSSCH resource bandwidth, and the SL-PRS and the PSSCH are frequency division multiplexed, the scheduling indication information or the resource pool configuration information is further used to indicate at least one of the following:
occupied bandwidth allocation information of the SL-PRS in the PSSCH resource;
the SL-PRS bandwidth; and
a variation bandwidth of the SL-PRS bandwidth relative to the PSSCH resource bandwidth.

In an optional embodiment, the occupied symbol information of the SL-PRS in the PSSCH resource includes at least one of the following:
at least one of an occupied symbol position, the number of occupied symbols, and a starting occupied symbol of the SL-PRS in PSSCH resource; and
an SL-PRS pattern, where the SL-PRS pattern is used to indicate at least two of the number of occupied symbols, an occupied symbol position, and a starting occupied symbol of the SL-PRS in the PSSCH resource, and a comb (comb) value of the SL-PRS.

In an optional embodiment, at least one of the occupied symbol position, the number of occupied symbols, and the starting occupied symbol of the SL-PRS in the PSSCH resource, and the comb value of the SL-PRS is related to second information, where the second information includes at least one of the following:
a symbol length of physical sidelink control channel PSCCH;
a starting symbol of the PSSCH;
a symbol length of the PSSCH;
a demodulation reference signal DMRS pattern; and
whether a slot in which the SL-PRS is located includes a physical sidelink feedback channel PSFCH resource.

In an optional embodiment, the starting occupied symbol of the SL-PRS in the PSSCH resource includes any one of the following:
a starting symbol of a PSSCH;
the N1-th symbol after the starting symbol of the PSSCH;
the N2-th symbol of the PSSCH resource;
the N3-th symbol after the last symbol of the PSCCH;
an optional symbol related to the DMRS pattern and the number of symbols occupied by the PSSCH;
the N4-th symbol after a DMRS symbol position; and
the N5-th symbol before a symbol position of the last DMRS.

In an optional embodiment, in a case that the starting occupied symbol of the SL-PRS in the PSSCH resource is the N1-th symbol after the starting symbol of the PSSCH, a value of N1 is related to the following information:
whether a starting symbol of the PSCCH is the same as the starting symbol of the PSSCH.

In an optional embodiment, an occupied symbol length of the SL-PRS in the PSSCH resource is related to third information, and the third information includes at least one of the following:
symbol positions of two adjacent DMRSs;
whether a slot in which the SL-PRS is located includes a PSFCH resource;
the number of PSSCH symbols;
a DMRS pattern; and
a position of DMRS.

In an optional embodiment, the apparatus further includes:
a twelfth determining module, configured to determine an SL-PRS pattern based on a correspondence between DMRS patterns and SL-PRS patterns; or
determine the SL-PRS pattern based on a DMRS pattern of PSSCH or fourth information; or
determine the SL-PRS pattern based on the correspondence between DMRS patterns and SL-PRS patterns and the DMRS pattern of PSSCH; where
the correspondence is predefined; and the fourth information includes at least one of the following:
   a symbol length of the PSCCH;
   a starting symbol of the PSSCH;
   a symbol length of the PSSCH; and
   whether a slot in which the SL-PRS is located includes a PSFCH resource.

In an optional embodiment, the apparatus further includes:
a thirteenth determining module, configured to determine an SL-PRS pattern based on fifth information and whether a slot in which the SL-PRS is located includes a PSFCH resource, where the fifth information includes at least one of the following:
a symbol length of the PSCCH;
a starting symbol of the PSSCH;
a symbol length of the PSSCH; and
a DMRS pattern.

In an optional embodiment, a comb value of the SL-PRS is related to sixth information, and the sixth information includes at least one of the following:
a symbol length of the SL-PRS;
a DMRS pattern; and
a symbol length of the PSSCH.

In an optional embodiment, the TDM mode for SL-PRS and PSSCH includes any one of the following:
TDM at a symbol level; and
TDM at a slot level.

In an optional embodiment, a configuration granularity of the resource pool configuration information includes at least one of the following:
per resource pool;
per quality of service QoS;
per logical channel;
per logical channel group;
per channel busy ratio CBR; and
per channel occupancy ratio CR.

In this embodiment of this application, the first terminal maps the SL-PRS to the scheduled PSSCH resource based on the determined first mapping information, for transmission; and the corresponding second terminal performs measurement on the SL-PRS based on the first mapping information, which can not only meet the requirements of positioning on resources, but also avoid interference of positioning on data signals.

It should be noted that the PRS transmission apparatus provided in the embodiments of this application is a transmission apparatus capable of executing the foregoing PRS transmission method, and all embodiments of the foregoing PRS transmission method are applicable to the apparatus, with the same or similar beneficial effects achieved.

The PRS transmission apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The PRS transmission apparatus provided in this embodiment of this application can implement the processes implemented in the method embodiment in FIG. 1 to FIG. 20, with the same technical effects achieved. To avoid repetition, details are not described herein again.

Optionally, as shown in FIG. 23, an embodiment of this application further provides a terminal 1800, including a processor 1801, a memory 1802, and a program or instructions stored in the memory 1802 and capable of running on the processor 1801. When the program or the instructions are executed by the processor 1801, the steps of the foregoing PRS transmission method embodiments are implemented, with the same technical effects achieved. To avoid repetition, details are not described herein again.

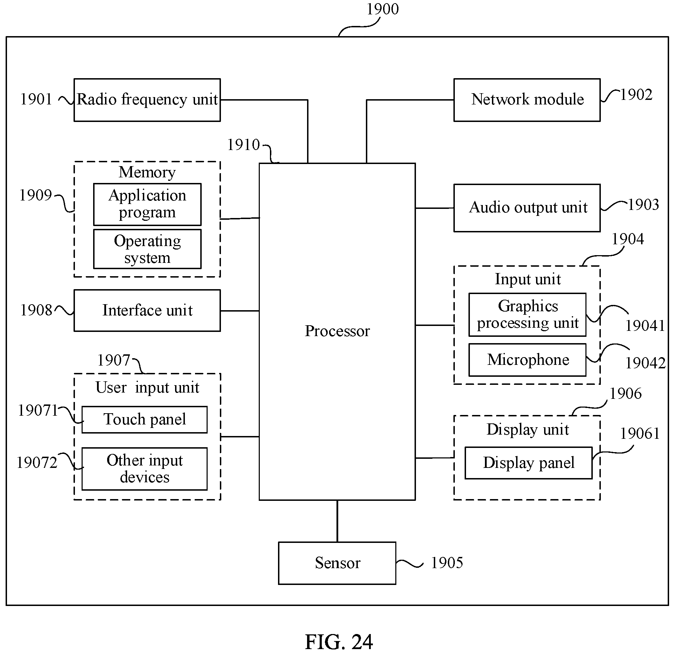

An embodiment of this application further provides a terminal, including a processor and a communication interface, where the processor is configured to: based on first mapping information, map a sidelink SL-PRS to a physical sidelink shared channel PSSCH resource for transmission, where the first mapping information includes at least one of the following: a relationship between an SL-PRS bandwidth and a PSSCH resource bandwidth; occupied symbol information of an SL-PRS in a PSSCH resource; and a time division multiplexing TDM mode for SL-PRS and PSSCH; or an embodiment of this application further provides a terminal, including a processor and a communication interface, where the processor is configured to: perform measurement on a sidelink SL-PRS based on first mapping information; where the first mapping information is used to indicate a mapping rule for mapping an SL-PRS to a PSSCH resource, and the first mapping information includes at least one of the following: a relationship between an SL-PRS bandwidth and a PSSCH resource bandwidth; occupied symbol information of an SL-PRS in a PSSCH resource; and a time division multiplexing TDM mode for SL-PRS and PSSCH. The terminal embodiments correspond to the foregoing terminal-side method embodiments, and the implementation processes and implementations of the foregoing method embodiments can be applied to the terminal embodiments, with the same technical effects achieved. Specifically, FIG. 24 is a schematic diagram of a hardware structure of a terminal for implementing the embodiments of this application.

The terminal 1900 includes but is not limited to at least part of components such as a radio frequency unit 1901, a network module 1902, an audio output unit 1903, an input unit 1904, a sensor 1905, a display unit 1906, a user input unit 1907, an interface unit 1908, a memory 1909, and a processor 1910.

Persons skilled in the art can understand that the terminal 1900 may further include a power supply (for example, a battery) supplying power to the components, and the power supply may be logically connected to the processor 1910 through a power management system. In this way, functions such as charge management, discharge management, and power consumption management are implemented by using the power management system. The structure of the terminal shown in FIG. 24 does not constitute any limitation on the terminal. The terminal may include more or fewer components than shown in the figure, or a combination of some components, or the components disposed differently. Details are not described herein again.

It can be understood that in this embodiment of this application, the input unit 1904 may include a graphics processing unit (Graphics Processing Unit, GPU) 19041 and a microphone 19042. The graphics processing unit 19041 processes image data of a still picture or video obtained by an image capture apparatus (such as a camera) in a video capture mode or an image capture mode. The display unit 1906 may include a display panel 19061, and the display panel 19061 may be configured in a form of a liquid crystal display, an organic light-emitting diode, and the like. The user input unit 1907 may include at least one of a touch panel 19071 and other input devices 19072. The touch panel 19071 is also referred to as a touchscreen. The touch panel 19071 may include two parts: a touch detection apparatus and a touch controller. The other input devices 19072 may include but are not limited to a physical keyboard, a function key (such as a volume control key or a power on/off key), a trackball, a mouse, a joystick, and the like. Details are not described herein.

In this embodiment of this application, the radio frequency unit 1901 receives downlink data from a network-side device, and then sends the downlink data to the processor 1910 for processing. In addition, the radio frequency unit 1901 may send uplink data to the network-side device. Generally, the radio frequency unit 1901 includes but is not limited to an antenna, an amplifier, a transceiver, a coupler, a low noise amplifier, a duplexer, and the like.

The memory 1909 may be configured to store software programs or instructions and various data. The memory 1909 may include a first storage area for storing a program or instructions and a second storage area for storing data. The first storage area may store an operating system, an application program or instruction required by at least one function (for example, a sound playback function or an image playback function), and the like. In addition, the memory 1909 may include a volatile memory or a non-volatile memory, or the memory 1909 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1909 in the embodiments of this application includes but is not limited to these and any other suitable types of memories.

The processor 1910 may include one or more processing units. Optionally, an application processor and a modem processor may be integrated in the processor 1910. The application processor primarily processes operations involving an operating system, user interfaces, application programs, and the like. The modem processor primarily processes radio communication signals, for example, being a baseband processor. It can be understood that the modem processor may alternatively be not integrated in the processor 1910.

The processor 1910 is configured to: based on first mapping information, map a sidelink SL-PRS to a physical sidelink shared channel PSSCH resource; and the radio frequency unit 1901 is configured to send the mapped SL-PRS and PSSCH, where the first mapping information includes at least one of the following:
a relationship between an SL-PRS bandwidth and a scheduled PSSCH resource bandwidth;
occupied symbol information of the SL-PRS in a scheduled PSSCH resource; and
a time division multiplexing TDM mode for SL-PRS and PSSCH.

Alternatively, the processor 1910 is configured to perform measurement on a sidelink SL-PRS based on first mapping information; where the first mapping information is used to indicate a mapping rule for mapping an SL-PRS to a PSSCH resource, and the first mapping information includes at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

In this embodiment of this application, the first terminal maps the SL-PRS to the scheduled PSSCH resource based on the determined first mapping information, for transmission; and the corresponding second terminal performs measurement on the SL-PRS based on the first mapping information, which can not only meet the requirements of positioning on resources, but also avoid interference of positioning on data signals.

It should be noted that the terminal provided in this embodiment of this application is a terminal capable of executing the foregoing PRS transmission method, and all embodiments of the foregoing PRS transmission method are applicable to the terminal, with the same or similar beneficial effects achieved.

An embodiment of this application further provides a readable storage medium, where a program or instructions are stored in the readable storage medium. When the program or the instructions are executed by a processor, the processes of the foregoing embodiments of the positioning reference signal PRS transmission method described above can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiments of the positioning reference signal PRS transmission method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing positioning reference signal PRS transmission method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A positioning reference signal PRS transmission method, comprising:
mapping, by a first terminal based on first mapping information, a sidelink SL-PRS to a physical sidelink shared channel PSSCH resource for transmission, wherein the first mapping information comprises at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

2. The method according to claim 1, wherein the method further comprises:
determining, by the first terminal based on a first mode, whether to transmit the SL-PRS on the PSSCH resource; wherein the first mode comprises at least one of the following:
an indication of scheduling indication information for scheduling a PSSCH; and
an indication of resource pool configuration information; wherein the resource pool configuration information is configured by a network, indicated by the network, configured by a terminal, indicated by the terminal, or indicated by a higher layer.

3. The method according to claim 1 or 2, wherein the method further comprises:
determining, by the first terminal, the first mapping information according to a first rule and/or first information; wherein the first information comprises at least one of the following:
the number of PSCCH symbols;
the number of PSSCH symbols;
a starting symbol of the PSSCH;
a demodulation reference signal DMRS pattern;
an SL-PRS pattern;
a starting symbol of SL-PRS;
a combination pattern of SL-PRS and DMRS;
a physical sidelink feedback channel PSFCH period; and
TDM configuration information for SL-PRS and PSSCH; wherein
the first rule is indicated by the scheduling indication information for scheduling a PSSCH or indicated by the resource pool configuration information, or the first rule is a predefined SL-PRS mapping rule.

4. The method according to claim 2 or 3, wherein the relationship between the SL-PRS bandwidth and the PSSCH resource bandwidth comprises:
the SL-PRS bandwidth is the same as the PSSCH resource bandwidth;
or
the SL-PRS bandwidth is different from the PSSCH resource bandwidth.

5. The method according to claim 4, wherein in a case that the SL-PRS bandwidth is different from the PSSCH resource bandwidth, and the SL-PRS and the PSSCH are time division multiplexed, the scheduling indication information or the resource pool configuration information is further used to indicate at least one of the following:
the SL-PRS bandwidth;
a variation bandwidth of the SL-PRS bandwidth relative to the PSSCH resource bandwidth;
a starting frequency domain position of the SL-PRS; and
offset information of the starting frequency domain position of the SL-PRS relative to a starting frequency domain position of the PSSCH resource.

6. The method according to claim 4, wherein in a case that the SL-PRS bandwidth is different from the PSSCH resource bandwidth, and the SL-PRS and the PSSCH are frequency division multiplexed, the scheduling indication information or the resource pool configuration information is further used to indicate at least one of the following:
occupied bandwidth allocation information of the SL-PRS in the PSSCH resource;
the SL-PRS bandwidth; and
a variation bandwidth of the SL-PRS bandwidth relative to the PSSCH resource bandwidth.

7. The method according to claim 6, wherein the mapping, by a first terminal, an SL-PRS to a PSSCH resource for transmission comprises:
performing, by the first terminal, rate matching or puncturing on an SL data channel or SL signal on the PSSCH resource.

8. The method according to claim 6, wherein the method further comprises:
determining, by the first terminal, a gap (gap) between an SL-PRS and an SL channel according to a predefinition, or a network configuration, or a terminal configuration.

9. The method according to any one of claims 1 to 8, wherein the occupied symbol information of the SL-PRS in the PSSCH resource comprises at least one of the following:
at least one of an occupied symbol position, the number of occupied symbols, and a starting occupied symbol of the SL-PRS in PSSCH resource; and
an SL-PRS pattern, wherein the SL-PRS pattern is used to indicate at least two of the number of occupied symbols, an occupied symbol position, and a starting occupied symbol of the SL-PRS in the PSSCH resource, and a comb (comb) value of the SL-PRS.

10. The method according to claim 9, wherein at least one of the occupied symbol position, the number of occupied symbols, and the starting occupied symbol of the SL-PRS in the PSSCH resource, and the comb value of the SL-PRS is related to second information, wherein the second information comprises at least one of the following:
a symbol length of physical sidelink control channel PSCCH;
a starting symbol of the PSSCH;
a symbol length of the PSSCH;
a demodulation reference signal DMRS pattern; and
whether a slot in which the SL-PRS is located comprises a physical sidelink feedback channel PSFCH resource.

11. The method according to claim 9, wherein the starting occupied symbol of the SL-PRS in the PSSCH resource is any one of the following:
a starting symbol of the PSSCH;
the N1-th symbol after the starting symbol of the PSSCH;
the N2-th symbol of the PSSCH resource;
the N3-th symbol after the last symbol of the PSCCH;
an optional symbol related to the DMRS pattern and the number of symbols occupied by the PSSCH;
the N4-th symbol after a DMRS symbol position; and
the N5-th symbol before a symbol position of the last DMRS.

12. The method according to claim 11, wherein in a case that the starting occupied symbol of the SL-PRS in the PSSCH resource is the N1-th symbol after the starting symbol of the PSSCH, a value of N1 is related to the following information:
whether a starting symbol of the PSCCH is the same as the starting symbol of the PSSCH.

13. The method according to claim 9, wherein an occupied symbol length of the SL-PRS in the PSSCH resource is related to third information, and the third information comprises at least one of the following:
symbol positions of two adjacent DMRSs;
whether a slot in which the SL-PRS is located comprises a PSFCH resource;
the number of PSSCH symbols;
a DMRS pattern; and
a position of DMRS.

14. The method according to claim 9, wherein the method further comprises:
determining, by the first terminal, an SL-PRS pattern based on a correspondence between DMRS patterns and SL-PRS patterns;
or
determining, by the first terminal, the SL-PRS pattern based on a DMRS pattern of PSSCH or fourth information;
or
determining, by the first terminal, the SL-PRS pattern based on the correspondence between DMRS patterns and SL-PRS patterns and the DMRS pattern of PSSCH; wherein
the correspondence is predefined; and the fourth information comprises at least one of the following:
a symbol length of the PSCCH;
a starting symbol of the PSSCH;
a symbol length of the PSSCH; and
whether a slot in which the SL-PRS is located comprises a PSFCH resource.

15. The method according to claim 9, wherein the method further comprises:
determining, by the first terminal, an SL-PRS pattern based on fifth information and whether a slot in which the SL-PRS is located comprises a PSFCH resource, wherein the fifth information comprises at least one of the following:
a symbol length of the PSCCH;
a starting symbol of the PSSCH;
a symbol length of the PSSCH; and
a DMRS pattern.

16. The method according to claim 9, wherein a comb value of the SL-PRS is related to sixth information, and the sixth information comprises at least one of the following:
a symbol length of the SL-PRS;
a DMRS pattern; and
a symbol length of the PSSCH.

17. The method according to any one of claims 1 to 16, wherein the TDM mode for SL-PRS and PSSCH comprises any one of the following:
TDM at a symbol level; and
TDM at a slot level.

18. The method according to claim 2 or 3, wherein a configuration granularity of the resource pool configuration information comprises at least one of the following:
per resource pool;
per quality of service QoS;
per logical channel;
per logical channel group;
per channel busy ratio CBR; and
per channel occupancy ratio CR.

19. A positioning reference signal PRS transmission method, comprising:
performing, by a second terminal, measurement on a sidelink SL-PRS based on first mapping information; wherein the first mapping information is used to indicate a mapping rule for mapping an SL-PRS to a PSSCH resource, and the first mapping information comprises at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

20. The method according to claim 19, wherein the performing, by a second terminal, measurement on an SL-PRS based on first mapping information comprises:
performing, by the second terminal, measurement on the SL-PRS based on the first mapping information and scheduling indication information for scheduling a PSSCH;
or
performing, by the second terminal, measurement on the SL-PRS based on the first mapping information and pre-configured information of the SL-PRS.

21. The method according to claim 19 or 20, wherein the method further comprises:
determining, by the second terminal based on a first mode, whether to transmit the SL-PRS on the PSSCH resource; wherein the first mode comprises at least one of the following:
an indication of scheduling indication information for scheduling a PSSCH; and
an indication of resource pool configuration information; wherein the resource pool configuration information is configured by a network, indicated by the network, configured by a terminal, indicated by the terminal, or indicated by a higher layer.

22. The method according to any one of claims 19 to 21, wherein the method further comprises:
determining, by the second terminal, the first mapping information according to a first rule and/or first information; wherein the first information comprises at least one of the following:
the number of PSCCH symbols;
the number of PSSCH symbols;
a starting symbol of the PSSCH;
a demodulation reference signal DMRS pattern;
an SL-PRS pattern;
a starting symbol of SL-PRS;
a combination pattern of SL-PRS and DMRS;
a physical sidelink feedback channel PSFCH period; and
TDM configuration information for SL-PRS and PSSCH; wherein
the first rule is indicated by the scheduling indication information for scheduling a PSSCH or indicated by the resource pool configuration information, or the first rule is a predefined SL-PRS mapping rule.

23. The method according to claim 21 or 22, wherein the relationship between the SL-PRS bandwidth and the PSSCH resource bandwidth comprises:
the SL-PRS bandwidth is the same as the PSSCH resource bandwidth;
or
the SL-PRS bandwidth is different from the PSSCH resource bandwidth.

24. The method according to claim 23, wherein in a case that the SL-PRS bandwidth is different from the PSSCH resource bandwidth, and the SL-PRS and the PSSCH are time division multiplexed, the scheduling indication information or the resource pool configuration information is further used to indicate at least one of the following:
the SL-PRS bandwidth;
a variation bandwidth of the SL-PRS bandwidth relative to the PSSCH resource bandwidth;
a starting frequency domain position of the SL-PRS; and
offset information of the starting frequency domain position of the SL-PRS relative to a starting frequency domain position of the PSSCH resource.

25. The method according to claim 23, wherein in a case that the SL-PRS bandwidth is different from the PSSCH resource bandwidth, and the SL-PRS and the PSSCH are frequency division multiplexed, the scheduling indication information or the resource pool configuration information is further used to indicate at least one of the following:
occupied bandwidth allocation information of the SL-PRS in the PSSCH resource;
the SL-PRS bandwidth; and
a variation bandwidth of the SL-PRS bandwidth relative to the PSSCH resource bandwidth.

26. The method according to any one of claims 19 to 25, wherein the occupied symbol information of the SL-PRS in the PSSCH resource comprises at least one of the following:
at least one of an occupied symbol position, the number of occupied symbols, and a starting occupied symbol of the SL-PRS in PSSCH resource; and
an SL-PRS pattern, wherein the SL-PRS pattern is used to indicate at least two of the number of occupied symbols, an occupied symbol position, and a starting occupied symbol of the SL-PRS in the PSSCH resource, and a comb (comb) value of the SL-PRS.

27. The method according to claim 26, wherein at least one of the occupied symbol position, the number of occupied symbols, and the starting occupied symbol of the SL-PRS in the PSSCH resource, and the comb value of the SL-PRS is related to second information, wherein the second information comprises at least one of the following:
a symbol length of physical sidelink control channel PSCCH;
a starting symbol of the PSSCH;
a symbol length of the PSSCH;
a demodulation reference signal DMRS pattern; and
whether a slot in which the SL-PRS is located comprises a physical sidelink feedback channel PSFCH resource.

28. The method according to claim 26, wherein the starting occupied symbol of the SL-PRS in the PSSCH resource is any one of the following:
a starting symbol of the PSSCH;
the N1-th symbol after the starting symbol of the PSSCH;
the N2-th symbol of the PSSCH resource;
the N3-th symbol after the last symbol of the PSCCH;
an optional symbol related to the DMRS pattern and the number of symbols occupied by the PSSCH;
the N4-th symbol after a DMRS symbol position; and
the N5-th symbol before a symbol position of the last DMRS.

29. The method according to claim 28, wherein in a case that the starting occupied symbol of the SL-PRS in the PSSCH resource is the N1-th symbol after the starting symbol of the PSSCH, a value of N1 is related to the following information:
whether a starting symbol of the PSCCH is the same as the starting symbol of the PSSCH.

30. The method according to claim 26, wherein an occupied symbol length of the SL-PRS in the PSSCH resource is related to third information, and the third information comprises at least one of the following:
symbol positions of two adjacent DMRSs;
whether a slot in which the SL-PRS is located comprises a PSFCH resource;
the number of PSSCH symbols;
a DMRS pattern; and
a position of DMRS.

31. The method according to claim 26, wherein the method further comprises:
determining, by the second terminal, an SL-PRS pattern based on a correspondence between DMRS patterns and SL-PRS patterns;
or
determining, by the second terminal, the SL-PRS pattern based on a DMRS pattern of PSSCH or fourth information;
or
determining, by the second terminal, the SL-PRS pattern based on a predefined correspondence between DMRS patterns and SL-PRS patterns and the DMRS pattern of PSSCH; wherein
the correspondence is predefined; and the fourth information comprises at least one of the following:
a symbol length of the PSCCH;
a starting symbol of the PSSCH;
a symbol length of the PSSCH; and
whether a slot in which the SL-PRS is located comprises a PSFCH resource.

32. The method according to claim 26, wherein the method further comprises:
determining, by the second terminal, an SL-PRS pattern based on fifth information and whether a slot in which the SL-PRS is located comprises a PSFCH resource, wherein the fifth information comprises at least one of the following:
a symbol length of the PSCCH;
a starting symbol of the PSSCH;
a symbol length of the PSSCH; and
a DMRS pattern.

33. The method according to claim 26, wherein a comb value of the SL-PRS is related to sixth information, and the sixth information comprises at least one of the following:
a symbol length of the SL-PRS;
a DMRS pattern; and
a symbol length of the PSSCH.

34. The method according to any one of claims 19 to 33, wherein the TDM mode for SL-PRS and PSSCH comprises any one of the following:
TDM at a symbol level; and
TDM at a slot level.

35. The method according to claim 21 or 22, wherein a configuration granularity of the resource pool configuration information comprises at least one of the following:
per resource pool;
per quality of service QoS;
per logical channel;
per logical channel group;
per channel busy ratio CBR; and
per channel occupancy ratio CR.

36. A positioning reference signal PRS transmission apparatus, comprising:
a sending module, configured to: based on first mapping information, map a sidelink SL-PRS to a physical sidelink shared channel PSSCH resource for transmission, wherein the first mapping information comprises at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

37. A positioning reference signal PRS transmission apparatus, comprising:
a measurement module, configured to perform measurement on a sidelink SL-PRS based on first mapping information; wherein the first mapping information is used to indicate a mapping rule for mapping an SL-PRS to a PSSCH resource, and the first mapping information comprises at least one of the following:
a relationship between an SL-PRS bandwidth and a PSSCH resource bandwidth;
occupied symbol information of an SL-PRS in a PSSCH resource; and
a time division multiplexing TDM mode for SL-PRS and PSSCH.

38. A terminal, comprising a processor and a memory, wherein a program or instructions capable of running on the processor are stored in the memory, and when the program or the instructions are executed by the processor, the steps of the positioning reference signal PRS transmission method according to any one of claims 1 to 18 are implemented, or the steps of the positioning reference signal PRS transmission method according to any one of claims 19 to 35 are implemented.

39. A readable storage medium, wherein the readable storage medium stores a program or instructions, and when the program or instructions are executed by a processor, the steps of the positioning reference signal PRS transmission method according to any one of claims 1 to 18 are implemented, or the steps of the positioning reference signal PRS transmission method according to any one of claims 19 to 35 are implemented.
